# FASCICULE DE BREVET EUROPEEN

(11) **EP 2 725 332 B1**
(45) Date de publication et mention de la délivrance du brevet: **22.08.2018**
(21) Numéro de dépôt: 13188515.4
(22) Date de dépôt: 14.10.2013
(51) Int. Cl.: G01L 1/18, G01D 5/12, G01P 15/12, H01C 10/10, G01P 15/08

(54) **Procédé de fabrication d'un capteur piézorésistif**
Herstellungsverfahren eines piezoresistiven Sensors
Method for manufacturing a piezoresistive sensor

(30) Priorité: 23.10.2012 FR 1260072
(43) Date de publication de la demande: 30.04.2014
(73) Titulaire: COMMISSARIAT À L'ÉNERGIE ATOMIQUE ET AUX ÉNERGIES ALTERNATIVES, 75015 Paris (FR)
(72) Inventeur: Polesel MARIS, Jérôme, 91190 GIF SUR YVETTE (FR)
(74) Mandataire: Gevers & Orès

(56) Documents cités:
- EP-A2- 1 279 927
- WO-A1-2006/101579
- US-A- 5 328 551
- US-A- 5 771 902
- US-A1- 2009 223 299
- FRAZIER A B: "RECENT APPLICATIONS OF POLYIMIDE TO MICROMACHINING TECHNOLOGY", IEEE TRANSACTIONS ON INDUSTRIAL ELECTRONICS, IEEE SERVICE CENTER, PISCATAWAY, NJ, USA, vol. 42, no. 5, 1 octobre 1995 (1995-10-01), pages 442-448, XP000542369, ISSN: 0278-0046, DOI: 10.1109/41.464605
- MOINUDDIN AHMED ET AL: "MEMS relative pressure sensor on flexible substrate", 2011 IEEE SENSORS PROCEEDINGS : LIMERICK, IRELAND, 28 - 31 OCTOBER 2011, IEEE, PISCATAWAY, NJ, 28 octobre 2011 (2011-10-28), pages 460-463, XP032093139, DOI: 10.1109/ICSENS.2011.6126932 ISBN: 978-1-4244-9290-9
- AVISHEK R AIYAR ET AL: "An all-polymer airflow sensor using a piezoresistive composite elastomer", SMART MATERIALS AND STRUCTURES, IOP PUBLISHING LTD., BRISTOL, GB, vol. 18, no. 11, 1 novembre 2009 (2009-11-01), page 115002, XP020168941, ISSN: 0964-1726
- IBBOTSON R H ET AL: "Polyimide microcantilever surface stress sensor using low-cost, rapidly-interchangeable, spring-loaded microprobe connections", MICROELECTRONIC ENGINEERING, ELSEVIER PUBLISHERS BV., AMSTERDAM, NL, vol. 85, no. 5-6, 1 mai 2008 (2008-05-01), pages 1314-1317, XP022678736, ISSN: 0167-9317, DOI: 10.1016/J.MEE.2007.12.065 [extrait le 2008-01-12]

## Description

La présente invention se rapporte au domaine des capteurs piézorésistifs et plus particulièrement aux procédés de fabrication de tels capteurs.

De manière connue, un capteur piézorésistif comprend au moins une partie mobile, avantageusement un levier, sur lequel est implantée une électrode de mesure dite jauge de contrainte. Généralement, il est prévu au moins deux leviers indépendants, comportant chacun au moins une électrode de mesure afin de réaliser une mesure différentielle.

La déformation mécanique du levier engendre une variation de la longueur de l'électrode implantée sur ce levier et ainsi, une variation de la résistance de cette électrode, qui peut être mesurée par une électronique externe. Lorsqu'il est prévu, l'autre levier sert de référence pour effectuer une mesure différentielle, plus précise, de la variation de cette résistance.

Un procédé de fabrication d'un tel capteur est par exemple proposé dans l'article d'Ibbotson & al. intitulé « Polyimide microcantilever surface stress sensor using low-cost, rapidly-interchangeable, spring-loaded microprobe connections », Microelectronic Engineering 85 (2008), pp. 1314-1317.

Dans ce procédé, les auteurs proposent une méthode pour fabriquer un capteur piézorésistif sur un support en polyimide.

Ce procédé comporte plusieurs inconvénients.

Tout d'abord, la fabrication de ce capteur nécessite une mise en oeuvre dans un environnement de type « salle blanche » et donc des infrastructures particulièrement onéreuses.

De plus, il est particulièrement long à mettre en oeuvre. En effet, il faut typiquement une trentaine d'heures pour obtenir le capteur souhaité.

En outre, il ne permet d'adapter la constante de raideur du levier du capteur qu'au prix d'étapes additionnelles qui en augmentent encore le coût et la durée de fabrication.

Le document US 5 771 902 décrit des actionneurs micro-usinés sur couche mince en porte à faux comportant des moyens pour commander individuellement la déflexion des actionneurs.

Le document US 5 328 551 décrit un procédé de fabrication d'une jauge de contrainte résistive à partir d'une feuille ayant un facteur de jauge d'au moins 4. Une feuille de Platine - Tungstène est collée à un substrat de polyimide avec un adhésif durci sous chaleur et pression.

Le document WO 2006/101579 décrit un capteur de pression piézorésistif et/ou une jauge de contrainte micro-usinés essentiellement à partir de matière plastique et/ou verre. Dans un mode de réalisation illustratif, le capteur de pression piézorésistif est formé sur un substrat polymère. Une première région implantée de manière sélective est prévue dans le substrat de polymère afin de créer une région piézorésistive dans le substrat de polymère. Une deuxième région implantée de manière sélective est alors prévue dans au moins une partie de la première région implantée de manière sélective pour moduler la conductivité électrique de la première région implantée de manière sélective.

Le document US 2009/0223299 décrit un capteur de pression de contact comprenant un ou plusieurs éléments capteurs MEMS (microelectromecanichal system), dans lequel chaque élément capteur comprend une partie de mince non-évidée, une partie évidée et un élément sensible à la pression adjacente à la partie évidée.

L'article « Recent Applications Applications of Polyimide to Micromachining Technology » de A. Bruno Frazier (IEEE Transactions on Industrial Electronics, IEEE Service Center, Piscataway, vol. 42, n°5, 1er octobre 1995, pages 442 - 448) décrit des applications récentes des matériaux en polyimide à la technologie de micro-usinage de capteurs, ce matériau faisant partie intégrante des dispositifs micro-usinés. L'accent est mis sur le développement et la caractérisation d'un composite piézo-résistif de particules de graphite et de polyimide.

L'article « MEMS Relative Pressure Sensors on Flexible Substrate » de Moinuddin Ahmed et al.

Un objectif de l'invention est ainsi de proposer un procédé de fabrication d'un capteur piézorésistif qui ne présente pas l'un au moins des inconvénients précédents.

En particulier, un objectif de l'invention est de proposer un procédé ne nécessitant pas un environnement de type « salle blanche ».

Pour atteindre l'un au moins de ces objectifs, l'invention propose un procédé de fabrication d'un capteur piézorésistif comprenant au moins un levier en polyimide muni d'au moins une électrode à partir d'une feuille en polyimide recouverte d'une couche métallique, comprenant les étapes suivantes :
(a) déposer une couche faite d'un matériau photosensible positif sur la couche métallique ;
(b) déposer un masque sur la couche en matériau photosensible, ledit masque étant un masque positif dont le motif définit au moins la forme de ou de chaque électrode métallique, à réaliser, du capteur ;
(c) insoler l'ensemble formé à l'issue de l'étape (b) du côté de la couche en matériau photosensible pour activer la partie de cette couche qui n'est pas protégée par le masque ;
(d) retirer le masque ;
(e) révéler par voie chimique le motif de la couche en matériau photosensible défini par le masque, cette étape permettant de supprimer la partie de la couche photosensible insolée lors de l'étape (c) et ainsi de mettre à nue une partie de la couche métallique ;
(f) effectuer un recuit initial pour durcir la partie de la couche en matériau photosensible restante ;
(g) supprimer par voie chimique la partie de la couche métallique qui a été mise à nue lors de l'étape (e), par exemple dans une solution d'attaque chimique aqueuse basique ou acide ;
(h) supprimer la partie de la couche en matériau photosensible restante, de sorte à former une feuille en polyimide sur laquelle est déposé le motif métallique correspondant à celui du masque ;
(i) former le ou chaque levier dans la feuille en polyimide,
caractérisé en ce qu'il comprend en outre les étapes suivantes :
- réaliser un premier pré-recuit pour évaporer les fluides absorbés par la couche en polyimide ;
- déposer une couche faite d'un matériau photosensible négatif sur une première face de l'ensemble concerné, cette première face étant la face de la feuille sur laquelle le motif métallique est déposé ;
- réaliser un deuxième pré-recuit pour chasser les solvants de la couche du matériau photosensible et en améliorer l'homogénéisation;
- déposer un masque sur la couche en matériau photosensible négatif, ledit masque étant un masque négatif dont le motif définit au moins la forme du ou de chaque levier, à réaliser, du capteur ;
- insoler l'ensemble formé à l'étape précédente par sa première face pour activer une partie de cette couche qui n'est pas protégée par le masque ;
- retirer le masque de la première face ;
- réaliser un premier recuit pour durcir la partie de la couche en matériau photosensible négatif qui n'est pas protégée par le masque ;
- révéler par voie chimique le motif du matériau photosensible défini par le masque, cette étape permettant ainsi de supprimer la partie de la couche en matériau photosensible négatif qui était protégée par le masque ;
- réaliser un deuxième recuit pour durcir complètement le motif du matériau photosensible ; puis :
- réaliser un troisième pré-recuit pour évaporer les fluides absorbés par la couche en polyimide ;
- déposer une couche faite d'un matériau photosensible négatif sur une deuxième face de l'ensemble formé à l'étape précédente, ladite deuxième face étant opposée à ladite première face ;
- réaliser un quatrième pré-recuit pour chasser les solvants de la couche du matériau photosensible et en améliorer l'homogénéisation;
- déposer un masque sur la couche en matériau photosensible négatif déposée sur la deuxième face, ledit masque étant un masque négatif agencé pour autoriser la formation du ou de chaque levier, à réaliser, du capteur ;
- insoler l'ensemble formé à l'étape précédente par la deuxième face pour activer une partie de la couche en matériau photosensible qui n'est pas protégée par le masque ;
- retirer le masque de la deuxième face ;
- réaliser un troisième recuit pour durcir la partie de la couche en matériau photosensible négatif situé sur la deuxième face qui n'est pas protégée par le masque ;
- révéler par voie chimique le motif du matériau photosensible défini par le masque, cette étape permettant ainsi de supprimer la partie de la couche en matériau photosensible négatif de la deuxième face qui était protégée par le masque ;
- réaliser un quatrième recuit pour durcir complètement le motif du matériau photosensible de la deuxième face ;
- immerger l'ensemble formé à l'issue de l'étape précédente dans une solution fortement basique apte à attaquer le polyimide dans les zones non protégées par le matériau photosensible pour une durée prédéterminée permettant de définir l'épaisseur du ou de chaque levier en polyimide.

Pour atteindre l'un au moins de ces objectifs, l'invention propose également un procédé de fabrication d'un capteur piézorésistif comprenant au moins un levier en polyimide muni d'au moins une électrode à partir d'une feuille en polyimide, les étapes suivantes,:
(aa) déposer une couche faite d'un matériau photosensible positif sur la feuille en polyimide ;
(bb) déposer un masque sur la couche en matériau photosensible, ledit masque étant un masque négatif dont le motif définit au moins la forme de ou de chaque électrodes métallique, à réaliser, du capteur ;
(cc) insoler l'ensemble formé à l'issue de l'étape (bb) du côté de la couche en matériau photosensible pour activer une première partie de cette couche qui n'est pas protégée par le masque ;
(dd) retirer le masque ;
(ee) révéler par voie chimique le motif de la couche en matériau photosensible défini par le masque, cette étape permettant de supprimer la partie de la couche photosensible insolée lors de l'étape (cc) et ainsi de mettre à nue une partie de la feuille en polyimide ;
(ff) déposer un métal sur la partie du polyimide mise à nue à l'issue de l'étape (ee), par exemple par pulvérisation sous vide ;
(gg) supprimer par voie chimique la partie de la couche en matériau photosensible restante, de sorte à former une feuille en polyimide sur laquelle est déposé le motif métallique correspondant à un négatif du motif du masque (hh) former le ou chaque levier dans la feuille en polyimide,
caractérisé en ce qu'il comprend en outre les étapes suivantes :
- réaliser un premier pré-recuit pour évaporer les fluides absorbés par la couche en polyimide ;
- déposer une couche faite d'un matériau photosensible négatif sur une première face de l'ensemble concerné, cette première face étant la face de la feuille sur laquelle le motif métallique est déposé ;
- réaliser un deuxième pré-recuit pour chasser les solvants de la couche du matériau photosensible et en améliorer l'homogénéisation;
- déposer un masque sur la couche en matériau photosensible négatif, ledit masque étant un masque négatif dont le motif définit au moins la forme du ou de chaque levier, à réaliser, du capteur ;
- insoler l'ensemble formé à l'étape précédente par sa première face pour activer une partie de cette couche qui n'est pas protégée par le masque ;
- retirer le masque de la première face ;
- réaliser un premier recuit pour durcir la partie de la couche en matériau photosensible négatif qui n'est pas protégée par le masque ;
- révéler par voie chimique le motif du matériau photosensible défini par le masque, cette étape permettant ainsi de supprimer la partie de la couche en matériau photosensible négatif qui était protégée par le masque ;
- réaliser un deuxième recuit pour durcir complètement le motif du matériau photosensible ; puis :
- réaliser un troisième pré-recuit pour évaporer les fluides absorbés par la couche en polyimide ;
- déposer une couche faite d'un matériau photosensible négatif sur une deuxième face de l'ensemble formé à l'étape précédente, ladite deuxième face étant opposée à ladite première face ;
- réaliser un quatrième pré-recuit pour chasser les solvants de la couche du matériau photosensible et en améliorer l'homogénéisation;
- déposer un masque sur la couche en matériau photosensible négatif déposée sur la deuxième face, ledit masque étant un masque négatif agencé pour autoriser la formation du ou de chaque levier, à réaliser, du capteur ;
- insoler l'ensemble formé à l'étape précédente par la deuxième face pour activer une partie de la couche en matériau photosensible qui n'est pas protégée par le masque ;
- retirer le masque de la deuxième face ;
- réaliser un troisième recuit pour durcir la partie de la couche en matériau photosensible négatif situé sur la deuxième face qui n'est pas protégée par le masque ;
- révéler par voie chimique le motif du matériau photosensible défini par le masque, cette étape permettant ainsi de supprimer la partie de la couche en matériau photosensible négatif de la deuxième face qui était protégée par le masque ;
- réaliser un quatrième recuit pour durcir complètement le motif du matériau photosensible de la deuxième face ;
- immerger l'ensemble formé à l'issue de l'étape précédente dans une solution fortement basique apte à attaquer le polyimide dans les zones non protégées par le matériau photosensible pour une durée prédéterminée permettant de définir l'épaisseur du ou de chaque levier en polyimide.

Le procédé pourra prévoir d'autres caractéristiques techniques de l'invention, prises seules ou en combinaison.
- l'étape (f) de recuit initial comprend les étapes suivantes : chauffer à 75°C pendant au moins 2 min ; réaliser une montée de la température de chauffage de 75°C à 100°C, par paliers successifs de 5°C en 5°C, chaque palier étant maintenu sur une durée d'au moins 2 min ; chauffer à 110°C pendant au moins 8 min ;
ladite étape (f) de recuit initial étant avantageusement suivie d'un refroidissement naturel à température ambiante ;
- préalablement à l'étape (aa) ou, selon le cas, l'étape (a), la feuille en polyimide, le cas échéant recouverte d'une couche métallique, est soumise à des rayons ultraviolets sous ozone ou à un traitement plasma sous argon et oxygène, éventuellement précédée d'un nettoyage sous acétone et/ou éthanol ;
- entre les étapes (a) et (b) ou, selon le cas, entre les étapes (aa) et (bb), on réalise un pré-recuit, par exemple sous 70°C pendant 30 minutes, suivi d'un refroidissement naturel ;
- l'étape (e), ou selon le cas, l'étape (ee), de révélation comprend les étapes suivantes : immerger l'ensemble formé à l'issue de l'étape (d), ou, selon le cas, à l'issue de l'étape (cc) dans une solution aqueuse basique, par exemple pendant quelques dizaines de secondes ; puis retirer cet ensemble de la solution aqueuse basique ; et immerger cet ensemble dans une autre solution aqueuse, éventuellement acidifiée, pour stopper la réaction chimique de révélation ;
- l'étape (h) ou, selon le cas, l'étape (gg) de suppression de la couche de matériau photosensible restante est réalisée par trempage de l'ensemble concerné dans un solvant organique, par exemple de l'acétone, éventuellement suivi d'un trempage dans un alcool tel que l'éthanol ;
- entre l'étape de premier pré-recuit et l'étape de dépôt de la couche en matériau photosensible négatif sur la première face et/ou entre l'étape de troisième pré-recuit et l'étape de dépôt de la couche en matériau photosensible sur la deuxième face, on soumet l'ensemble concerné aux rayons ultraviolets sous ozone ou à un traitement plasma sous argon et oxygène ;
- le premier pré-recuit ou le troisième pré-recuit est réalisé à 100°C pendant une durée d'au moins une heure ;
- le deuxième pré-recuit ou le quatrième pré-recuit est effectué en deux étapes consistant à effectuer un premier chauffage entre 75°C et 95°C par palier successif de 5°C d'une durée de 2 min chacun suivie d'un deuxième chauffage à 105°C pendant une durée d'une minute ;
- l'un au moins du premier recuit ou du troisième recuit réalisé pour la formation du ou de chaque levier en polyimide comprend les étapes suivantes : chauffer à 75°C pendant au moins 2 min ; réaliser une montée de la température de chauffage de 75°C à 105°C, sur une durée d'au moins 30 s ; chauffer à 105°C pendant au moins 2 min ; ladite étape de recuit étant avantageusement suivie d'un refroidissement naturel à température ambiante ;
- l'une au moins des étapes de révélation réalisée pour la formation du motif de protection en matériau photosensible du ou de chaque levier en polyimide est effectuée par trempage de l'ensemble concerné dans une solution Propylène Glycol Monométhyl Ether Acétate (PGMEA) pendant une durée comprise entre 1 min et 2 min, puis rinçage dans une solution aqueuse pour une durée comprise entre 30 s et 2min ;
- l'un au moins du deuxième recuit ou du quatrième recuit visant à durcir complètement le motif du matériau photosensible consiste à chauffer l'ensemble concerné à une température d'au moins 150°C pendant une durée minimum de 30 min ;
- l'étape d'immersion de l'ensemble concerné dans une solution basique apte à attaquer le polyimide comprend les étapes suivantes : immerger cet ensemble dans une solution comportant de la potasse KOH, de l'éthanolamine et de l'eau ultrapure déionisée à une température comprise entre 50°C et 80°C pendant une durée comprise entre 4 min et 5 min; retirer cet ensemble de la solution aqueuse basique ; immerger cet ensemble dans une autre solution aqueuse, éventuellement acidifiée ;
- une protection telle qu'une graisse silicone est appliquée sur une partie du motif métallique non recouverte d'un matériau photosensible, juste avant l'étape d'immersion de l'ensemble concerné dans une solution basique apte à attaquer le polyimide ;
- l'étape (i) comprend les étapes suivantes : imprimer une encre solide sur une première face de l'ensemble formé à l'issue de l'étape (h) ou, selon le cas, à l'issue de l'étape (gg), sur une zone comportant au moins le motif métallique ; imprimer une encre solide sur une partie seulement d'une deuxième face de l'ensemble formé à l'issue de l'étape (h), ou, selon le cas, à l'issue de l'étape (gg), cette deuxième face étant la face qui est opposée à la première face ; immerger l'ensemble formé à l'issue de l'étape précédente dans une solution basique apte à attaquer le polyimide dans les zones non protégées par l'encre solide pour une durée prédéterminée permettant de définir l'épaisseur du ou de chaque levier en polyimide ; supprimer l'encre solide, par exemple en immergeant l'ensemble formé à l'issue de l'étape précédente dans un solvant organique tel que l'acétone ou l'éthanol.
- l'étape d'immersion dans une solution basique apte à attaquer le polyimide comprend les étapes suivantes : immerger cet ensemble dans une solution comportant de la potasse KOH, de l'éthanolamine et de l'eau ultrapure déionisée, à une concentration en poids KOH:C₂H₇NO:H₂O de 1 :2 :2 et à une température comprise entre 50°C et 80°C et pendant une durée d'immersion comprise entre 4 min et 5 min ; retirer cet ensemble de la solution aqueuse basique ; immerger cet ensemble dans une autre solution aqueuse, éventuellement acidifiée.
- l'étape (i) consiste à découper le polyimide avec un laser à la forme souhaitée pour former le ou chaque levier, le laser étant par exemple un laser CO₂ ;
- à l'issue de l'étape (i), on réalise une étape additionnelle de dépôt d'une couche protectrice du motif métallique, par exemple par polymérisation en phase gazeuse de monomères de paracyclophane obtenu par pyrolyse, ou par électrogreffage d'une peinture électrophorétique ;
- l'une au moins des étapes de dépôt d'un masque est réalisée par application physique ou par projection lithographique ;
- l'une au moins des étapes d'insolation s'effectue sous UV-A pendant une durée comprise entre 1 min et 2 min.

D'autres caractéristiques, buts et avantages de l'invention seront énoncés dans la description détaillée ci-après faite en référence aux figures suivantes:
- la figure 1 est un schéma représentant, selon une vue de dessus, un masque positif susceptible d'être employé dans le procédé de fabrication des électrodes selon l'invention ;
- la figure 2 représente, selon une vue de dessus, un élément obtenu au cours de la fabrication du capteur selon le procédé conforme à l'invention ;
- la figure 3 représente, selon une vue en perspective, un élément obtenu ultérieurement, par rapport à l'élément représenté sur la figure 2, dans la fabrication du capteur ;
- la figure 4 représente, selon une vue de côté, un élément obtenu ultérieurement, par rapport à l'élément représenté sur la figure 3, dans la fabrication du capteur ;
- la figure 5 représente, selon une vue en perspective, un élément obtenu ultérieurement, par rapport à l'élément représenté sur la figure 4, dans la fabrication du capteur ;
- la figure 6 est un schéma représentant, selon une vue de dessus, un masque négatif susceptible d'être employé dans le procédé de fabrication des électrodes selon l'invention ;
- la figure 7 représente un signal électrique obtenu avec un capteur fabriqué selon le procédé de l'invention, en réponse à une sollicitation mécanique via un actionneur piézoélectrique ;
- la figure 8 est un schéma réactionnel d'un procédé de fonctionnalisation d'une surface en polyimide, par exemple appartenant capteur fabriqué selon l'invention ;
- la figure 9 représente une surface en polyimide fonctionnalisée conformément au schéma réactionnel de la figure 8 (à gauche) et la même surface obtenue après greffage d'une protéine (à droite) ;
- la figure 10 représente les spectres FTIR d'une surface en polyimide d'un support fonctionnalisé avec la protéine OVA-8 par le procédé schématisé sur les figures 8 et 9.

La description qui suit est faite relativement à un capteur comportant deux leviers, chacun muni d'une électrode et dans lequel le support des électrodes, incluant notamment les deux leviers de ce capteur, sont en polyimide et les électrodes réalisées en métal.

Le métal est de préférence un métal bon conducteur de l'électricité tel que l'aluminium, le cuivre ou l'or.

Nous allons tout d'abord décrire un premier procédé de fabrication d'un capteur piézorésistif comprenant deux leviers en polyimide, disposés en parallèle, dans lequel chaque levier est muni d'une électrode.

Pour la mise en oeuvre de ce premier procédé, on part d'une feuille en polyimide recouverte d'une couche métallique. Des feuilles en polyimide recouvertes d'une couche métallique sont disponibles sur le marché. Par exemple, les sociétés Micel ou Dupont de Nemours fournissent de telles feuilles déjà recouvertes d'une couche métallique. Chez Dupont de Nemours, la feuille en polyimide est commercialisée sous la dénomination Kapton®.

Typiquement, l'épaisseur de la feuille en polyimide est de 50 µm et l'épaisseur de la couche métallique, par exemple en aluminium, de 80 nm.

Le capteur piézorésistif ainsi réalisé peut donc être qualifié de capteur submillimétrique.

Le premier procédé selon l'invention comprend les étapes (a) à (i) suivantes.

Lors de l'étape (a), on dépose une couche faite d'un matériau photosensible positif sur la couche métallique, à savoir sur la face métallisée de la feuille de polyimide.

Un matériau photosensible positif est un matériau pour lequel la partie destinée à être exposée à la lumière (insolation ; étape (c)) devient soluble dans un révélateur (étape (e)) et pour lequel la partie non exposée à la lumière reste insoluble.

Le matériau photosensible positif est avantageusement une résine, telle que la résine Kontakt Chemie Positiv 20 ou l'AZ5214.

Le dépôt du matériau photosensible positif sur la couche métallique peut s'effectuer à la tournette (« *spin-coater* » selon la terminologie anglo-saxonne).

En pratique, on fixe la feuille de polyimide recouverte de sa couche métallique sur une tournette. Puis, dans le cas d'un matériau photosensible tel que la résine Kontakt Chemie Positiv 20, on vaporise la résine à une distance comprise entre 5 cm et 10 cm de la tournette. Puis, on actionne la tournette à une vitesse de rotation 60tr/min pendant au moins 45 s, on augmente cette vitesse jusqu'à 300 tr/min sur une durée de 20 s et enfin, on maintient cette vitesse de 300 tr/min pendant au moins 20 s.

L'épaisseur de dépôt de la résine est alors d'environ 2 µm.

L'étape de dépôt à la tournette permet d'étaler le matériau photosensible sur l'ensemble de la couche métallique, avec une épaisseur contrôlée.

Préalablement à l'étape (a), une préparation de l'ensemble formé par la feuille en polyimide et sa couche métallique est avantageusement réalisée.

Pour cette préparation, on soumet cet ensemble à un rayonnement ultraviolet sous ozone (par exemple sur une durée de 10mn) ou à un traitement plasma sous Ar :O₂ (par exemple 5% :95%, 50Watts sur une durée d'1mn). Ceci permet de provoquer un nettoyage des polluants organiques et une activation de la surface exposée afin d'augmenter ses capacités d'adhésion avec la couche en matériau photosensible à déposer ultérieurement. Cette étape n'est pas obligatoire.

Eventuellement, cette dernière étape d'activation est précédée d'un nettoyage sous acétone et/ou éthanol, puis séchage sous flux d'azote, pour améliorer la propreté de surface de cet ensemble.

Lors de l'étape (b), on dépose un masque sur la couche en matériau photosensible, ledit masque étant un masque positif dont le motif définit au moins la forme des électrodes métalliques, à réaliser, du capteur.

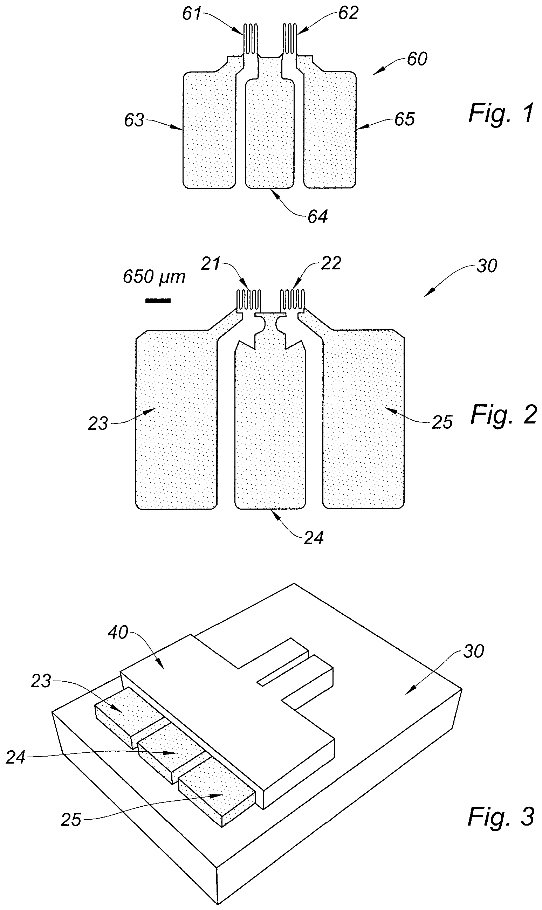

Par masque positif, on entend un masque plein. Un tel masque 60 est par exemple représenté sur la figure 1. Sur ce masque, on observe notamment la forme des deux électrodes de mesure 61, 62 à réaliser et la forme des macroélectrodes 63, 64, 65 à réaliser et qui serviront à faire le lien avec l'électronique de commande du capteur, à réaliser.

Ce masque peut être appliqué physiquement ou par projection lithographique.

Entre les étapes (a) et (b), il est avantageux de réaliser un pré-recuit. Ce pré-recuit permet d'évacuer les solvants contenus dans le matériau photosensible, et d'homogénéiser l'épaisseur de la couche en matériau photosensible. Il peut par exemple être réalisé dans une étuve à 70°C pendant 30 minutes.

Ce pré-recuit est alors généralement suivi d'un refroidissement naturel à température ambiante, par exemple d'une durée d'au moins une heure.

Lors de l'étape (c), on insole l'ensemble formé à l'issue de l'étape (b) du côté de la couche en matériau photosensible pour activer la partie de cette couche qui n'est pas protégée par le masque.

Dans la mesure où le masque est un masque positif, c'est la partie située autour du masque qui est insolée.

L'étape d'insolation est avantageusement réalisée sous UV-A (entre 350nm et 400nm en longueur d'onde) pendant une durée comprise entre 1 min et 2 min, par exemple 1 min et 20 s.

Puis, lors de l'étape (d), on retire le masque. Ceci peut s'effectuer soit physiquement, soit par retrait de l'ensemble de la zone de projection lithographique.

Une étape (e) de révélation, par voie chimique, du motif de la couche en matériau photosensible défini par le masque, est alors effectuée.

Cette étape permet de supprimer la partie de la couche photosensible insolée lors de l'étape (c) et ainsi de mettre à nue une partie de la couche métallique. On comprend que la partie de la couche métallique qui est alors mise à nue est la partie de cette couche qui est située autour du masque positif, la partie de cette couche métallique qui était située sous le masque positif n'ayant pas été insolée.

L'étape de révélation peut s'effectuer comme suit.

On immerge l'ensemble formé à l'issue de l'étape (d) dans une solution aqueuse basique. Cette immersion peut s'effectuer sur une durée de quelques dizaines de secondes, par exemple 30s. La solution aqueuse basique peut être obtenue en diluant des sels d'hydroxyde de sodium (NaOH) ou d'hydroxyde de potassium (KOH) dans de l'eau ultrapure déionisée (typiquement 18.2 MΩ.cm) à une concentration de 7g/l.

Puis, on retire cet ensemble de la solution aqueuse basique.

On immerge ensuite, de préférence immédiatement, cet ensemble dans un récipient d'eau ultrapure déionisée (par exemple 18.2 MΩ.cm), éventuellement acidifiée pour faciliter la neutralisation de l'effet de la base. Par exemple, cette acidification de l'eau ultrapure peut être obtenue par dilution d'acide chlorhydrique à 0.1 M à raison de 10ml/l dans le récipient d'eau ultrapure déionisée.

Lors de l'étape (f), on effectue un recuit initial pour durcir la partie de la couche en matériau photosensible restante. Cette partie restante a la forme du motif du masque positif. Un séchage sous flux d'azote est avantageusement réalisé juste avant l'étape de recuit initial.

Dans le cas de l'utilisation d'une résine, il s'agit donc ici de polymériser la résine restante, afin que cette dernière résiste à l'attaque chimique effectuée sur le métal à l'étape (g) ultérieure.

Cette étape (f) de recuit initial, réalisée juste après la révélation, peut être effectuée comme suit. On chauffe l'ensemble concerné, par exemple sur une plaque chauffante, à une température de 75°C pendant 2mn, puis on réalise des paliers successifs de 5°C en 5°C pour lesquels chaque palier est maintenu pendant 2 min jusqu'à la température de 100°C pour enfin, passer à la température de 110°C maintenue pendant 8 min.

Ce recuit initial est suivi d'un refroidissement naturel à température ambiante, par exemple pendant au moins 30 min.

Lors de l'étape (g), on supprime, par voie chimique, la partie de la couche métallique qui a été mise à nue lors de l'étape (e).

A cet effet, on peut par exemple utiliser une solution aqueuse basique très diluée pour attaquer un métal tel que l'aluminium. Cette solution peut être obtenue en diluant des sels de KOH ou NaOH d'une masse de 680 mg dans 80 ml d'eau ultrapure déionisée (par exemple 18.2 MΩ.cm).

Après immersion de l'ensemble dans cette dernière solution basique, typiquement, le temps d'attaque du métal est d'environ 3 min.

On retire ensuite l'ensemble concerné de la solution basique. Cet ensemble est alors immergé dans une solution d'eau ultrapure déionisée à pH neutre, préférentiellement légèrement acidifiée pour faciliter la neutralisation de l'effet de la base. Ainsi, on pourra utiliser une solution d'acide chlorhydrique diluée dans de l'eau ultrapure 5%.

Alternativement, pour réaliser l'attaque de la couche d'aluminium à nue, on pourra utiliser de manière avantageuse une solution acide comportant un mélange d'acide phosphorique (55-65%), d'acide nitrique (1-5%), d'acide acétique (3-5%) et d'eau. Cette dernière solution existe sur le marché. Le caractère acide de cette solution d'attaque de l'aluminium permet d'épargner une attaque non voulue de la couche du matériau photosensible réalisant le masquage des zones de métal à protéger de l'attaque.

On retire ensuite l'ensemble concerné de la solution d'attaque acide.

Cet ensemble est alors immergé dans une solution d'eau ultrapure déionisée à pH neutre pour stopper la réaction d'attaque chimique.

Il est à noter que si le métal déposé sur la feuille de polyimide initial est du cuivre en lieu et place de l'aluminium, les étapes de fabrication précédentes (a) à (f) restent identiques.

Toutefois, la solution employée pour l'attaque chimique de l'aluminium de l'étape (g) sera remplacée par une solution de FeCl₃ :H₂O acide attaquant le cuivre. On retire ensuite l'ensemble concerné de la solution d'attaque. Cet ensemble est alors immergé dans une solution d'eau ultrapure déionisée à pH neutre pour stopper la réaction d'attaque chimique.

Par ailleurs, si le métal déposé sur la feuille de polyimide initial est de l'or en lieu et place de l'aluminium, les étapes de fabrication précédentes (a) à (f) restent identiques.

Toutefois, la solution d'attaque du métal de l'étape (g) sera dans ce cas remplacée par une solution de Kl :H₂O ou d'eau régale (mélange 3:1 en volumes d'acide chlorhydrique concentré et d'acide nitrique concentré) attaquant l'or. On retire ensuite l'ensemble concerné de la solution d'attaque. Cet ensemble est alors immergé dans une solution d'eau ultrapure déionisée à pH neutre pour stopper la réaction d'attaque chimique.

Lors de l'étape (h), on supprime la partie de la couche en matériau photosensible restante, de sorte à former une feuille en polyimide sur laquelle est déposé le motif métallique correspondant à celui du masque. On réalise avantageusement un nettoyage à l'acétone pour retirer les éventuels résidus de matériau photosensible.

Ceci peut s'effectuer par trempage de l'ensemble concerné dans un solvant organique tel que l'acétone et/ou l'éthanol.

Une feuille en polyimide comportant le motif métallique est représentée, selon une vue de dessus, sur la figure 2. Sur cette figure 2, on observe la feuille en polyimide 30 et le motif métallique comportant les électrodes de mesure 21, 22 (dites jauges de contrainte) et les macroélectrodes 23, 24, 25.

Enfin, l'étape (i) consiste à former les leviers dans la feuille en polyimide.

L'étape (i) peut être réalisée selon différentes variantes.

Nous allons tout d'abord décrire une première variante envisageable pour la réalisation des leviers du capteur piézorésistif dans la feuille de polyimide.

En premier lieu, on réalise un motif de matériau photosensible durci sur le motif métallique, selon les étapes qui suivent.

Avantageusement, on réalise un nettoyage à l'acétone et/ou l'éthanol puis un séchage à l'azote.

On réalise un premier pré-recuit de l'ensemble formé à l'étape (h). Ce premier pré-recuit permet d'évaporer les fluides absorbés par le polyimide (eau par exemple) lors des étapes précédentes.

Ce premier pré-recuit peut être effectué dans une étuve maintenue à une température de 100°C, pour une durée d'au moins une heure.

L'évaporation des fluides préalablement absorbés par le polyimide permet d'éviter les problèmes de décollement entre la feuille en polyimide et la couche en matériau photosensible à déposer ultérieurement.

Avantageusement, mais non obligatoirement, ce pré-recuit est suivi d'un traitement aux ultraviolets sous ozone, par exemple de 10 min, ou d'un traitement plasma sous Ar :O₂ (par exemple 5% :95%, 50Watts), par exemple d'1 min, pour activer la surface du polyimide et ainsi améliorer son adhésion avec la couche en matériau photosensible à déposer ultérieurement.

On dépose une couche faite d'un matériau photosensible négatif sur une première face de l'ensemble concerné, cette première face étant la face de la feuille sur laquelle le motif métallique a été formé.

Un matériau photosensible négatif est un matériau pour lequel la partie non exposée à la lumière devient soluble dans un révélateur et pour lequel la partie exposée à la lumière reste insoluble.

Ce matériau photosensible négatif sera généralement une résine, par exemple une résine de type SU8 proposé par la société MicroChem, ou de type PM240 proposé par la société Dupont de Nemours.

Le dépôt du matériau photosensible négatif sur la face de la feuille dotée du motif métallique peut s'effectuer à la tournette (« *spin-coater* » selon la terminologie anglo-saxonne).

En pratique, on fixe l'ensemble à recouvrir sur une tournette. Dans le cas de la résine SU8, on verse une faible quantité de résine (par exemple 1ml) sur la face haute de l'ensemble. Puis, on actionne la tournette depuis la vitesse de rotation nulle jusqu'à une vitesse de rotation 500 tr/min sur une durée de 10s, on augmente cette vitesse de rotation depuis la vitesse de rotation de 500 tr/min jusqu'à 2000 tr/min et on maintient cette dernière vitesse de rotation sur une durée d'au moins 30 s.

Cette étape permet d'homogénéiser la répartition du matériau photosensible sur la feuille en polyimide.

On réalise ensuite un deuxième pré-recuit pour chasser les solvants de la couche en matériau photosensible, et d'améliorer l'homogénéisation de cette couche.

Celui-ci peut être réalisé en deux étapes consistant à effectuer un premier chauffage entre 75°c et 95°c par palier successif de 5°C d'une durée de 2 min chacun suivie d'un deuxième chauffage à 105°C pendant une durée d'au moins une minute.

Ce deuxième pré-recuit est avantageusement suivi d'un refroidissement naturel à température ambiante, d'au moins une heure afin d'éviter un choc thermique et d'éviter ainsi l'apparition de craquelures dans la couche en matériau photosensible.

On dépose un masque sur la couche en matériau photosensible négatif, ledit masque étant un masque négatif dont le motif définit au moins la forme des leviers, à réaliser, du capteur.

Le dépôt du masque peut s'effectuer physiquement ou par projection lithographique.

On insole l'ensemble formé à l'étape précédente par sa première face pour activer une partie de cette couche qui n'est pas protégée par le masque.

L'étape d'insolation est avantageusement réalisée sous UV-A, par exemple à 365 nm, pendant une durée comprise entre 1 min et 2 min, par exemple 1 min 10 s. On retire le masque de la première face. Ceci peut s'effectuer soit physiquement, soit par retrait de l'ensemble de la zone de projection lithographique.

On réalise un premier recuit pour durcir la partie de la couche en matériau photosensible négatif qui n'est pas protégée par le masque, donc qui a été soumise à l'illumination sous UV-A. Cette étape de premier recuit peut être réalisée de la façon suivante :
- chauffer à 75°C pendant au moins 2 min ;
- réaliser une montée de la température de chauffage de 75°C à 105°C, sur une durée d'au moins 30 s ;
- chauffer à 105°C pendant au moins 2 min ;
ladite première étape de recuit étant avantageusement suivie d'un refroidissement naturel à température ambiante, pour une durée d'au moins 30 min.

Dans le cas d'une résine, par exemple la résine SU8, cela permet de polymériser celle-ci.

On révèle par voie chimique le motif du matériau photosensible défini par les ouvertures du masque, cette étape permettant ainsi d'ôter la partie de la couche en matériau photosensible négatif qui était protégée par le masque.

Pour la résine SU8, ceci peut s'effectuer par trempage de l'ensemble concerné dans une solution Propylène Glycol Monométhyl Ether Acétate (PGMEA) pendant une durée comprise entre 1 min et 2 min. Puis, un rinçage sous agitation périodique dans une solution d'eau ultrapure déionisée (par exemple 18.2 MΩ.cm) pour une durée comprise entre 30 s et 2 min, par exemple 1mn, est effectuée.

On réalise enfin un deuxième recuit pour durcir complètement le motif du matériau photosensible. Cela permet d'obtenir un matériau photosensible capable de résister à l'attaque de solutions alcalines, acides ou à des solvants organiques.

Ce deuxième recuit de durcissement total du matériau photosensible peut être effectué à une température de 150°C pour une durée d'au moins 30mn. Dans le cas de la résine SU8, on effectue donc ici une polymérisation totale de celle-ci.

A l'issue de ces différentes étapes, on obtient l'ensemble représenté schématiquement, selon une vue en perspective, de la figure 3. La feuille en polyimide 30 comporte, sur une première face, le motif métallique recouvert d'une couche protectrice 40 en matériau photosensible durci. Sur cette figure 3, on note que l'extrémité de chaque macroélectrode 23, 24, 25 est en l'occurrence à nu pour permettre ultérieurement une connexion avec une électronique de commande.

En second lieu, on réalise un motif de matériau photosensible durci sur le polyimide, au niveau d'une face dite deuxième face opposée à la face comportant le motif métallique, quant à elle nommé première face.

Ceci s'effectue de manière similaire au motif de matériau photosensible réalisé sur la face comportant le motif métallique, à l'exception de la forme du masque.

Avantageusement, on réalise un nettoyage à l'acétone et/ou l'éthanol puis un séchage à l'azote.

Ainsi, on réalise un troisième pré-recuit pour évaporer les fluides absorbés par la couche en polyimide. Ce troisième pré-recuit permet d'évaporer les fluides absorbés par le polyimide (eau par exemple) lors des étapes précédentes.

Ce troisième pré-recuit peut être effectué comme le premier pré-recuit.

Avantageusement, mais non obligatoirement, ce pré-recuit est suivi d'un traitement aux ultraviolets sous ozone, par exemple de 10 min, ou d'un traitement plasma Ar :O₂ (par exemple 5% :95%, 50 Watts), par exemple d'1mn, pour activer la surface du polyimide et ainsi améliorer encore son adhésion avec la couche en matériau photosensible à déposer ultérieurement.

On dépose une couche faite d'un matériau photosensible négatif sur une deuxième face de l'ensemble formé à l'étape précédente, ladite deuxième face étant opposée à ladite première face.

Ce matériau photosensible négatif sera généralement une résine, par exemple une résine de type SU8 proposé par la société MicroChem, ou de type PM240 proposé par la société Dupont de Nemours.

Le dépôt peut être fait à la tournette, selon le protocole expliqué précédemment pour le dépôt de la couche en matériau photosensible déposée sur la première face.

On réalise un quatrième pré-recuit pour chasser les solvants de la couche du matériau photosensible, et améliorer l'homogénéisation de cette couche.

Ce quatrième pré-recuit peut être réalisé selon le protocole décrit précédemment pour le deuxième pré-recuit.

On dépose un masque sur la couche en matériau photosensible négatif déposée sur la deuxième face, ledit masque étant un masque négatif agencé pour autoriser la formation des leviers, à réaliser, du capteur, et à recouvrir la zone définie par les macroélectrodes métalliques 23, 24, 25.

Le dépôt du masque peut s'effectuer physiquement ou par projection lithographique.

On insole l'ensemble formé à l'étape précédente par la deuxième face pour activer une partie de la couche en matériau photosensible qui n'est pas protégée par le masque. L'étape d'insolation est avantageusement réalisée sous UV-A, par exemple à 365nm, pendant une durée comprise entre 1 min et 2 min, par exemple 1 min 10 s.

On retire alors le masque de la deuxième face. Ceci peut s'effectuer soit physiquement, soit par retrait de l'ensemble de la zone de projection lithographique.

On réalise un troisième recuit pour durcir la partie de la couche en matériau photosensible négatif situé sur la deuxième face qui n'est pas protégée par le masque. Le troisième recuit est avantageusement réalisé selon le protocole décrit précédemment pour le premier recuit et offre les mêmes avantages que ce dernier.

Ensuite, on révèle par voie chimique le motif du matériau photosensible défini par le masque, cette étape permettant ainsi d'ôter la partie de la couche en matériau photosensible négatif de la deuxième face qui était protégée par le masque.

Pour la résine SU8, on utilisera avantageusement une solution de type PGMEA, comme décrit précédemment.

Enfin, on réalise un quatrième recuit pour durcir complètement le motif du matériau photosensible de la deuxième face. Ce quatrième recuit est avantageusement réalisé selon le protocole du troisième recuit, réalisé pour la première face, et présente les mêmes avantages que ce dernier. Dans le cas de la résine SU8, ce quatrième recuit permet une polymérisation totale de celle-ci.

A ce stade, on a donc une feuille en polyimide 30 comportant sur sa première face un motif métallique au moins partiellement recouvert d'une couche protectrice 40 (par exemple en SU8) définissant notamment la forme des leviers du capteur et comportant sur sa deuxième face un autre motif de couche protectrice 41 (par exemple SU8) recouvrant notamment la zone définie par les macroélectrodes métalliques 23, 24, 25 de la figure 2.

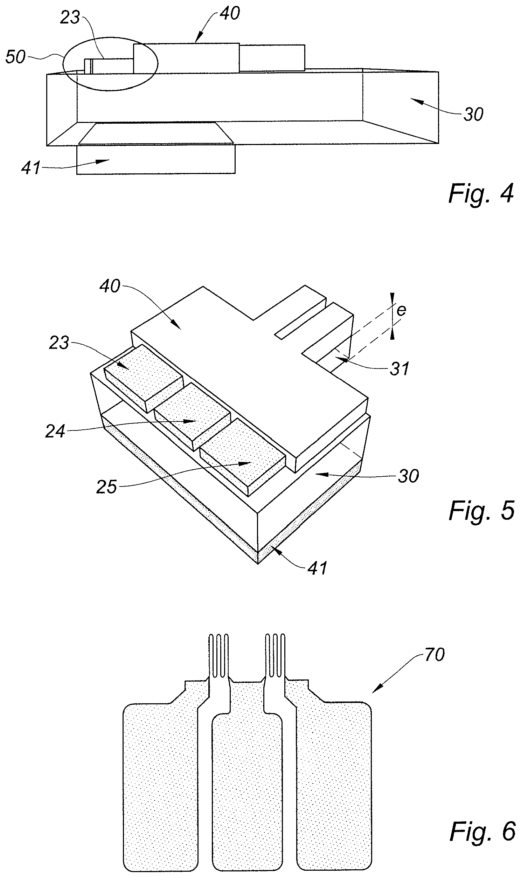

On peut se référer à la vue de côté de la figure 4
L'étape qui suit consiste à former les leviers proprement dits.

Pour cela, on recouvre, si nécessaire, les parties du motif métallique qui ne sont éventuellement pas protégées, par exemple en utilisant une graisse silicone ou PDMS de type DOW CORNING® HIGH VACUUM GREASE.

Cela peut être le cas si, en plus des électrodes de mesure 21, 22, il est prévu des macroélectrodes 23, 24, 25 pour connecter l'électronique de commande. Dans ce cas, une partie des macroélectrodes métalliques n'est pas protégée pour permettre un branchement à cette électronique de commande comme représenté sur la figure 4.

Cette protection peut s'effectuer par application d'une graisse silicone capable de résister à l'attaque chimique de l'étape ultérieure formant les leviers dans le polyimide, par exemple en utilisant une graisse silicone ou PDMS de type DOW CORNING® HIGH VACUUM GREASE.

En variante, le dépôt d'une encre solide de type « Wax » sur ces parties des macroélectrodes peut être réalisée.

La zone à protéger est référencée 50 sur la figure 4.

La formation des leviers est effectuée en immergeant l'ensemble formé à l'issue de l'étape précédente dans une solution fortement basique apte à attaquer le polyimide dans les zones non protégées par le matériau photosensible, ou par la graisse silicone ou Wax, pour une durée prédéterminée permettant de définir l'épaisseur des leviers en polyimide.

A cet effet, on peut envisager le protocole suivant.

On immerge cet ensemble dans une solution comportant de la potasse KOH, de l'éthanolamine et de l'eau ultrapure déionisée à une concentration en poids KOH :C₂H₇NO:H₂O 1 :2 :2 et dont la température est comprise entre 50°C et 80°C. Cette température est par exemple de 70°C. La durée d'immersion est comprise entre 4 min et 5 min.

Puis, on retire cet ensemble de la solution aqueuse basique.

Enfin, on immerge immédiatement cet ensemble dans un récipient d'eau ultrapure déionisée (par exemple 18.2 MΩ.cm), éventuellement acidifiée pour faciliter la neutralisation de l'effet de la base. Par exemple, cette acidification de l'eau ultrapure peut être obtenue par dilution d'acide chlorhydrique à 0.1 M à raison de 10 ml/ l dans le récipient d'eau ultrapure déionisée.

Le cas échéant, le nettoyage de la graisse silicone, protégeant les zones nues des macroélectrodes, s'effectue en deux temps. Dans un premier temps, on immerge l'ensemble concerné dans de l'éthanol puis on retire physiquement la graisse (avec une spatule par exemple). Dans un deuxième temps, on imbibe un coton tige d'éthanol pour retirer manuellement la graisse résiduelle restante.

Une fois l'attaque chimique du polyimide réalisée, éventuellement avec la graisse silicone retirée, on réalise un nettoyage final en plongeant le capteur ainsi obtenu dans un bain d'acétone et/ou d'éthanol.

Un ultime séchage à l'étuve est réalisé, par exemple à 100°C pour une durée de 15 min.

On obtient ainsi le capteur représenté, selon une vue en perspective, sur la figure 5.

Sur cette figure 5, on observe l'un 31 des deux leviers en polyimide, dont l'épaisseur e est déterminée par le temps d'attaque du polyimide dans la solution fortement basique décrite précédemment. Les deux leviers sont libérés l'un de l'autre car aucune protection contre l'attaque chimique du polyimide n'a été réalisée entre les deux zones de la protection en matériau photosensible durci (par exemple SU8) présentant chacune la forme d'un levier.

Une deuxième variante envisageable pour la réalisation des leviers du capteur piézorésistif de l'étape (i) dans la feuille de polyimide est décrite ci-après.

On imprime une encre solide sur une première face de l'ensemble formé à l'issue de l'étape (h) sur une zone comportant au moins le motif métallique des électrodes.

Cette encre solide peut être une encre connue sous le nom de « *Wax* ». A cet effet, on peut réaliser une impression direction de l'encre solide avec une imprimante à sublimation de type XEROX Phaser 8400.

L'encre solide a pour fonction de protéger le motif métallique (électrodes de mesure 21, 22 et macroélectrodes 23, 24, 25 (figures 3 et 5) dans le cas du motif de la figure 2 par exemple) et une partie de la face du polyimide sur laquelle le motif métallique est déposé, dite première face. En particulier, il convient de noter que la partie de cette première face qui est située entre les deux électrodes 21, 22 ne doit pas être protégée pour permettre ultérieurement la libération des leviers. En revanche, la partie de cette première face qui est située autour des macroélectrodes 23, 24, 25 est protégée.

Sur cette première face, l'encre solide remplit donc ici la fonction de la graisse silicone décrite précédemment.

Puis, on imprime une encre solide sur une partie seulement d'une deuxième face de l'ensemble formé à l'issue de l'étape (h). Cette deuxième face est la face de la feuille en polyimide qui est opposée à la première face de cette feuille qui comporte le motif métallique et l'encre solide déjà déposée.

Cette impression est avantageusement réalisée comme précédemment.

L'encre solide a ici pour fonction de protéger, dans certaines zones, la deuxième face du polyimide.

Ensuite, on immerge l'ensemble formé à l'issue de l'étape précédente dans une solution fortement basique apte à attaquer le polyimide dans les zones non protégées par l'encre solide pour une durée prédéterminée permettant de définir l'épaisseur des leviers en polyimide.

Cette dernière étape s'effectue avantageusement comme suit.

On immerge cet ensemble dans une solution comportant de la potasse KOH, de l'éthanolamine et de l'eau ultrapure déionisée, à une concentration en poids KOH :C₂H₇NO:H₂O 1 :2 :2 et dont la température est comprise entre 50°C et 80°C. Cette température est par exemple de 70°C. La durée d'immersion est comprise entre 4 min et 5 min.

L'attaque chimique s'effectue par les deux faces de la feuille en polyimide.

On retire cet ensemble de la solution aqueuse basique.

Enfin, on immerge immédiatement cet ensemble dans un récipient d'eau ultrapure déionisée (par exemple 18.2 MΩ.cm), éventuellement acidifiée pour faciliter la neutralisation de l'effet de la base. Par exemple, cette acidification de l'eau ultrapure peut être obtenue par dilution d'acide chlorhydrique à 0.1 M à raison de 10 ml/ l dans le récipient d'eau ultrapure déionisée.

Au niveau de la première face, l'attaque chimique permet de libérer les deux leviers comportant chacun une électrode de mesure 21, 22.

Au niveau de la deuxième face, la durée de cette attaque chimique permet de contrôler l'épaisseur de polyimide rongée par la solution basique et ainsi, de contrôler l'épaisseur restante de polyimide qui constitue l'épaisseur d'un levier. En contrôlant l'épaisseur de chaque levier, on peut ainsi définir comme on le souhaite sa constante de raideur en fonction de l'application à laquelle le capteur piézorésistif est destiné.

Enfin, on supprime l'encre solide, par exemple en immergeant l'ensemble formé à l'issue de l'étape précédente dans un solvant organique tel que l'acétone ou l'éthanol.

A ce stade, on a donc défini un capteur comprenant des leviers en polyimide sur lesquels sont situés des électrodes de mesure et des macroélectrodes servant à communiquer avec l'électronique de commande. Cela correspond à la représentation de la figure 5, sans la couche protectrice 40.

Le capteur piézorésistif est donc formé.

Il convient cependant de noter que le motif métallique est alors à nu sur l'extérieur.

Cela peut convenir pour certaines applications.

Cependant, il est possible de prévoir une étape additionnelle visant à protéger, au moins en partie, le motif métallique.

Une couche protectrice du motif métallique peut ainsi être déposée par polymérisation en phase gazeuse de monomères de paracyclophane (par exemple parylène N ou C) obtenu par pyrolyse ou par électrogreffage d'une peinture électrophorétique. Des détails concernant ces méthodes sont fournies dans le document WO 2012/084994.

Cette couche protectrice remplit alors la fonction remplie par la couche protectrice 40 de la figure 5.

Une troisième variante envisageable de réalisation des leviers du capteur piézorésistif de l'étape (i) dans la feuille de polyimide consiste à découper le polyimide avec un laser à la forme souhaitée pour former les leviers.

Avantageusement, le laser est un laser CO₂ tel que le laser SPIRIT 35W de la société Axyslaser.

Cette technique est rapide. Cependant, elle présente une limitation liée à la résolution du laser CO₂, d'environ 100 µm.

Cette découpe laser étant réalisée sur la feuille en polyimide comportant le motif métallique, cette variante ne permet pas de protéger le motif métallique.

Pour cette raison, il est possible de prévoir une étape additionnelle visant à protéger, au moins en partie, le motif métallique. Comme décrit précédemment, une couche protectrice du motif métallique peut être déposée par polymérisation en phase gazeuse de monomères de paracyclophane (par exemple parylène N ou C) obtenu par pyrolyse ou par électrogreffage d'une peinture électrophorétique.

Nous allons maintenant décrire un deuxième procédé de fabrication du capteur piézorésistif, qui permet de fabriquer ce capteur à partir d'une feuille en polyimide, non recouverte d'une couche métallique.

Ce deuxième procédé de fabrication se distingue notamment du premier procédé de fabrication par le fait qu'il nécessite une étape de dépôt du métal et emploie un masque négatif.

Un masque négatif est un masque évidé, dont la forme de l'évidement permet de définir le motif métallique souhaité.

Lors de l'étape (aa), on dépose une couche faite d'un matériau photosensible positif sur la feuille en polyimide.

Le matériau photosensible positif est avantageusement une résine, telle que la résine Kontakt Chemie Positiv 20 ou l'AZ5214.

Le dépôt du matériau photosensible positif sur la couche métallique peut s'effectuer à la tournette (« *spin-coater* » selon la terminologie anglo-saxonne), selon un procédé identique à celui qui a été décrit pour l'étape (a).

L'étape de dépôt à la tournette permet d'étaler le matériau photosensible sur l'ensemble de la couche métallique, avec une épaisseur contrôlée.

Préalablement à l'étape (aa), la feuille en polyimide est avantageusement soumise à des rayons ultraviolets sous ozone (par exemple 10 min) ou à un traitement plasma Ar :O2 (par exemple 5% :95%, 50 Watts sur une durée d'1 min). Ceci permet de créer une activation à la surface du polyimide afin d'améliorer son adhésion avec la couche de matériau photosensible à déposer.

Eventuellement, cette dernière étape est précédée d'un nettoyage sous acétone et/ou éthanol, puis d'un séchage sous flux d'azote.

Puis, lors d'une étape (bb), on dépose un masque sur la couche en matériau photosensible, ledit masque étant un masque négatif dont le motif définit au moins la forme des électrodes métalliques, à réaliser, du capteur.

Ce masque négatif 70 est représenté sur la figure 6. Il forme un négatif du masque positif 60 représenté sur la figure 1.

Ce masque peut être appliqué physiquement ou par projection lithographique.

Entre les étapes (aa) et (bb), il est avantageux de réaliser un pré-recuit. Ce pré-recuit permet d'évacuer les solvants contenus dans le matériau photosensible, et d'homogénéiser l'épaisseur de la couche en matériau photosensible. Il peut par exemple être réalisé dans une étuve à 70°C pendant 30 minutes.

Ce pré-recuit est alors généralement suivi d'un refroidissement naturel à température ambiante, par exemple d'une durée d'au moins une heure.

Lors de l'étape (cc), on insole l'ensemble formé à l'issue de l'étape (bb) du côté de la couche en matériau photosensible pour activer la partie de cette couche qui n'est pas protégée par le masque.

Dans la mesure où le masque est un masque négatif, c'est la partie située à l'intérieur, dans l'évidement du masque qui est insolée.

L'étape d'insolation est avantageusement réalisée sous UV-A (entre 350 nm et 400 nm en longueur d'onde) pendant une durée comprise entre 1 min et 2 min, par exemple 1 min 20 s.

Ensuite, on retire le masque lors d'une étape (dd). Ceci peut s'effectuer soit physiquement, soit par retrait de l'ensemble de la zone de projection lithographique.

Puis, lors de l'étape (ee), on révèle par voie chimique le motif de la couche en matériau photosensible défini par le masque. Cette étape permet de supprimer la partie de la couche photosensible insolée lors de l'étape (cc) et ainsi de mettre à nue une partie de la feuille en polyimide.

L'étape de révélation (ee) peut s'effectuer comme décrite précédemment pour l'étape (d) du premier procédé de fabrication du capteur piézorésistif.

Lors d'une étape (ff), on dépose un métal sur la partie du polyimide mise à nue à l'issue de l'étape (ee). Cette étape est avantageusement réalisée par pulvérisation sous vide du métal. Les métaux sources pouvant être utilisés seront par exemple de l'or, de l'aluminium ou du cuivre.

Lors d'une étape (gg), on supprime alors, par voie chimique, la partie de la couche en matériau photosensible restante, de sorte à former une feuille en polyimide sur laquelle est déposé le motif métallique correspondant à un négatif du motif du masque.

Cette étape (gg) est avantageusement réalisée dans les conditions décrites précédemment pour l'étape (h) du premier procédé de fabrication du capteur piézorésistif, à savoir par trempage de l'ensemble concerné dans un solvant organique tel que l'acétone et/ou l'éthanol suivi d'un séchage sous flux d'azote.

Enfin, une étape (hh) est prévue pour former les leviers dans la feuille en polyimide.

Cette étape (hh) correspond à l'étape (i) du premier procédé de fabrication décrit précédemment.

De ce fait, toutes les variantes de réalisation de l'étape (i) de formation des leviers dans la feuille en polyimide décrites précédemment sont applicables pour la réalisation de l'étape (hh).

Ceci se comprend dans la mesure où à l'issue de l'étape (gg), on définit une feuille en polyimide sur laquelle est déposé un motif métallique qui est identique à la feuille en polyimide sur laquelle est déposé un même motif métallique obtenue à l'issue de l'étape (h).

Il convient par ailleurs de noter que, pour le premier procédé de fabrication du capteur piézorésistif, il est également envisageable de partir d'une feuille en polyimide non recouverte d'une couche métallique.

Dans ce cas, l'étape (a) est précédée d'une étape de dépôt de la couche métallique, par exemple par pulvérisation sous vide du métal. Les métaux sources pouvant être utilisés seront par exemple de l'or, de l'aluminium ou du cuivre. Avantageusement, la préparation de l'ensemble formé par la feuille en polyimide et la couche métallique (nettoyage ; UV/ozone ou Plasma Ar :O₂ par exemple 5% :95%, 50 Watts) est réalisée comme décrit précédemment et les étapes (a) à (i) sont réalisées. Un capteur piézorésistif comportant deux leviers sur chacun desquels a été déposé une électrode de mesure, fabriquée conformément au procédé de fabrication décrit à l'appui des figures 1 à 5, a été testé.

Une sollicitation mécanique périodique et triangulaire a été imposée à l'un seulement des leviers, l'autre servant de référence. L'électronique de commande a permis de vérifier que le signal électrique 100 (il s'agit d'une tension) obtenu en réponse était également un signal périodique et triangulaire.

La linéarité du capteur a donc été mise en évidence.

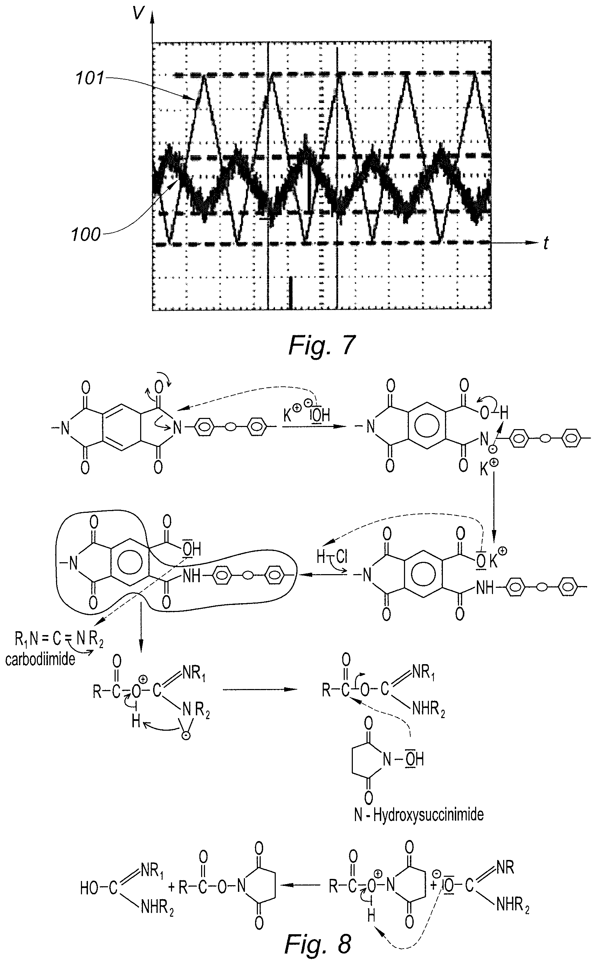

On pourra se référer à la figure 7.

Sur cette figure 7, le signal 101 correspond au signal électrique d'excitation imposé sur un actionneur piézoélectrique induisant, par contact direct imposé à seulement un des deux leviers piézorésistifs du capteur, une sollicitation mécanique périodique et triangulaire sur ce levier. L'excitation 101 et la réponse électrique 100 sont en opposition de phase sur la figure 7 car la sollicitation mécanique agit en compression sur la jauge de contrainte du levier. Un renversement de la position du capteur par rapport à l'actionneur provoquerait une réponse en phase de l'excitation 101 et de la réponse électrique 100.

Dans la description faite précédemment, nous avons donné l'exemple de la fabrication d'un capteur piézorésistif comportant deux leviers, en parallèles, chacun de ces leviers étant muni d'une électrode de mesure formant jauge de contrainte.

Bien entendu, on peut prévoir un seul levier, tout comme plus de deux leviers disposés en parallèle. On peut également fabriquer en parallèle plusieurs capteurs, à un ou plusieurs leviers, à partir d'une même feuille en polyimide. Les procédés de fabrication décrits précédemment étant tous compatibles avec une architecture en réseaux de leviers composant un capteur. Ceci ne dépend que du motif du masque.

Un avantage du procédé de l'invention dans lequel l'étape (i) ou (hh) de formation du ou de chaque levier mène à l'obtention d'un levier dont la première face (face recto) portant les électrodes est protégée par une résine polymérisée et restante, telle qu'en particulier la résine SU8, et la deuxième face (face verso) est en polyimide, est que la face en polyimide reste activable chimiquement.

La face recto protégée est résistante à l'attaque de solutions acides basiques ou de solvants. Cette configuration bimorphe avantageuse permet l'utilisation du capteur piézorésistif notamment en tant que bio-capteur. Pour ce faire, il suffit d'activer la face verso en polyimide des leviers en immergeant le capteur dans une solution basique, la face recto du capteur, protégée par la résine SU8 polymérisée restant inerte chimiquement.

M. Ali et al. ("Modifying the surface charge of single track-etched conical nanopores in polyimide", Nanotechnology. 19 (2008) 085713) proposent un protocole de fonctionnalisation par des groupements -COO-NHS sur une surface en polyimide, à partir de groupes carboxyliques induits sur des canaux formés dans le polyimide par bombardement d'ions lourds (U, Au, et Pb) suivi d'un trempage dans un bain d'hypochlorite de sodium pour révéler les canaux formés par les trajectoires des ions lourds du type Pb, U, Au.

Ce type d'activation chimique du polyimide est difficilement transposable à la modification chimique de la face verso des leviers des capteurs de l'invention. En effet, l'énergie cinétique et la trajectoire de ces ions lourds endommageraient de manière irréversible les électrodes du capteur. De plus, la traversée complète de l'ion lourd dans la structure en polyimide ne permet en aucune manière de contrôler une activation sur une seule des deux faces du levier et nécessaire pour sa transformation en bio-capteur. Le procédé d'activation chimique de M. Ali *et al.* est donc incompatible pour définir un biocapteur à partir d'un capteur piézoresistif en polyimide selon l'invention.

Dès lors, les inventeurs ont mis au point un procédé d'activation chimique d'une surface d'un support en polyimide activable, dans une solution de KOH 1M à température ambiante pendant 20 minutes, en polyamate de potassium comme indiqué par Kang-Wook Lee et al. dans "Surface Modification of PMDA-ODA Polyimide: Surface Structure-Adhesion Relationship", Macromolecules. 23 (1990) 2097-2100. Après acidification de cet état polyamate, par exemple avec de l'acide chlorhydrique HCl 0,1M à température ambiante pendant 20 minutes, on obtient une surface de polyimide activée par des groupes carboxyliques -COOH. Le matériau polyimide ainsi activé est alors placé dans une solution contenant 20 ml d'acétonitrile et 230 mg de N-Hydroxysuccinimide (NHS) à 97%, solution à laquelle 0,2 ml de N,N'-diisopropyl-carbodiimide sont ajoutés goutte à goutte à l'aide d'une seringue, et laissé sous agitation 2 heures à température ambiante pour obtenir l'estérification des fonctions carboxyliques.

Le schéma de ces réactions est montré sur la figure 8.

Ce protocole chimique simple à mettre en oeuvre permet d'obtenir spécifiquement la fonctionnalisation de la face verso du levier, la face recto étant recouverte de résine SU8 réticulée qui ne réagit pas avec la chimie mise en oeuvre.

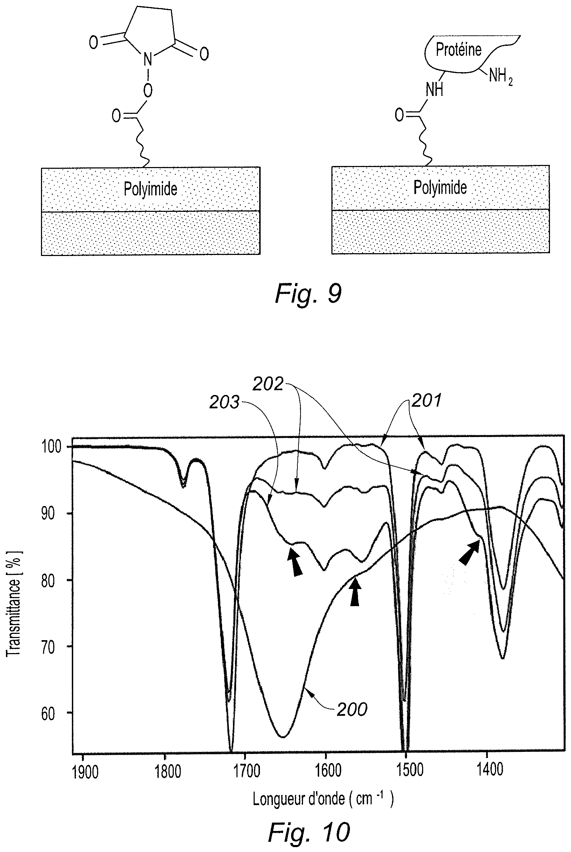

Cet aspect est remarquable car il permet de façon inédite et en une seule étape d'obtenir une fonctionnalisation rapide, simple et hautement propice aux capteurs à leviers de type bimorphe par détection de contrainte. Le matériau polyimide ainsi modifié présente en surface des groupements fonctionnels de type -COO-N-Succinimide pouvant servir de base au greffage ultérieur d'autres molécules telles que par exemples des protéines, comme illustré sur la figure 9.

Il suffit par exemple de déposer sur le polyimide estérifié une goutte de solution de protéine diluée dans un tampon, de type tampon HEPES (pH 6.8-8.2), tampon phosphate PBS (pH 7.2-8.4) ou tampon borate (pH 7.8-9.6), pour obtenir un greffage covalent de la protéine via un groupement amine -NH₂ disponible d'un de ces acides aminées, par exemple une arginine ou une lysine

Ainsi, l'invention propose également un procédé d'activation chimique d'une surface en polyimide qui comprend les étapes suivantes :
A) traitement de la surface en polyimide activée chimiquement, comme précédemment décrit, avec une solution de KOH 1M à température ambiante pendant 20 minutes,
B) acidification de la surface obtenue à l'étape A), de préférence avec HCl 0,1M à température ambiante pendant 20 minutes,
C) trempage de cette surface, sur son support, dans une solution d'acétonitrile contenant 23 g/L de N-Hydroxysuccinimide,
D) ajout goutte à goutte de 0,2 l/L de la solution utilisée à l'étape C), de N, N'-diisopropyl-carbodiimide, et
E) agitation pendant 2 heures à température ambiante de la solution de l'étape D), avec la surface sur son support trempée à l'intérieure de cette solution,
ce par quoi on obtient des groupements -COO-N-succinimide liés à la surface en polyimide.

Ce procédé d'activation chimique étant appliqué à une surface en polyimide quelconque, il peut notamment être appliqué sur un capteur piézorésistif obtenu avec l'un des procédés de fabrication décrits précédemment.

Ainsi, l'invention propose un capteur piézorésistif comprenant au moins un levier en polyimide sur lequel est située une électrode de mesure, par exemple métallique, ledit capteur comportant par ailleurs des groupements -COO-N-succinimide liés à la surface en polyimide du levier. Compte tenu de la fonctionnalisation de ce capteur, il peut être défini comme un biocapteur piézorésistif.

L'invention propose également un procédé de biofonctionnalisation d'une surface en polyimide d'un support comprenant les étapes suivantes :
AA) une étape d'activation chimique de la surface en polyimide par le procédé d'activation chimique selon les étapes A) à E) décrites précédemment, et
BB) une étape de greffage de molécules biologiques sur la surface activée obtenue à l'étape AA).

Dans un mode de mise en oeuvre particulier du procédé, à l'étape BB), la molécule biologique est une protéine greffée par greffage covalent entre un de ses groupements -NH₂ d'un de ses acides aminés et un groupe -COO-N-succinimide de la surface activée en polyimide.

Le biocapteur piézorésistif décrit précédemment peut donc être utilisé pour capter le greffage de molécules biologiques sur sa surface activée.

Un exemple de mise en oeuvre du procédé d'activation chimique et du procédé de biofonctionnalisation de l'invention est donné ci-après.

### Exemple

On a procédé au greffage d'une solution d'ovalbumine (OVA-8) sur le levier des capteurs.

La solution d'ovalbumine (OVA-8) (solution à 180 µg/ml en Tp phosphate de potassium 50 mM pH 7,4), est diluée d'un facteur 10 dans une solution tampon borate.

L'échantillon est placé dans un cristallisoir avec un pilulier rempli d'eau pour saturer l'atmosphère en humidité, on dépose une goutte de la solution de protéine diluée sur le levier et le tout est recouvert d'un grand cristallisoir, à température ambiante.

La réaction dure 3 h.

L'échantillon est nettoyé avec du tampon borate et drainé avec de l'eau milli-Q, puis conservé dans la solution tampon.

Une analyse FTIR et une analyse complémentaire par fluorescence après réaction spécifique avec une anti-ovalbumine (OVA-1) labellisée par un marqueur fluorescent FP-488, ont été réalisées.

Les spectres FTIR obtenus sont représentés en figure 10.

Le spectre FTIR de l'albumine OVA-8 est référencé 200. Celui du polyimide brut est référencé 201. Le spectre FTIR obtenu après greffage de l'albumine OVA-8 sur le polyimide et rinçage avec du tampon borate puis avec de l'eau Milli-Q est référencé 202. Enfin, le spectre FTIR du même échantillon après immersion de celui-ci dans un milieu agressif tel que de l'eau de mer sous agitation à température ambiante pendant 6 heures est référencé 203.

Comme on peut le constater sur la figure 10, La présence de cette albumine est attestée par les pics caractéristiques de cette protéine à 1650, 1550, 1450 et 1409 cm⁻¹. Trois de ces pics de la protéine OVA-8 présents sur l'échantillon sont indiqués par des flèches noires épaisses sur la figure 10.

De plus, la courbe 203 de la figure 10 témoigne de la présence de la protéine OVA-8 restant toujours greffée sur le même échantillon après immersion de celui-ci dans un milieu agressif tel que de l'eau de mer sous agitation à température ambiante pendant 6 heures. Ce résultat confirme la robustesse de la liaison chimique covalente entre l'échantillon polyimide et la protéine pour une utilisation du biocapteur sur le long terme.

L'analyse par fluorescence valide le greffage protéinique sélectif sur le polyimide fonctionnalisé activé chimiquement par le procédé de l'invention.

Le procédé d'activation chimique, et le procédé de biofonctionalisation d'une surface en polyimide selon l'invention sont donc d'une grande simplicité de mise en oeuvre en comparaison aux procédés d'activation chimique et de biofonctionalisation d'une surface en polyimide basés sur les silanes, tels que ceux décrits, par exemple dans E. Melnik R. Bruck, R. Hainberger, M. Lämmerhofer, "Multi-step surface functionalization of polyimide based evanescent wave photonic biosensors and application for DNA hybridization by Mach-Zehnder interferometer.", Analytica Chimica Acta. 699 (2011) 206-15.

## Revendications

1. Procédé de fabrication d'un capteur piézorésistif comprenant au moins un levier en polyimide muni d'au moins une électrode à partir d'une feuille en polyimide recouverte d'une couche métallique, comprenant les étapes suivantes :
(a) déposer une couche faite d'un matériau photosensible positif sur la couche métallique ;
(b) déposer un masque sur la couche en matériau photosensible, ledit masque étant un masque positif dont le motif définit au moins la forme de ou de chaque électrode métallique, à réaliser, du capteur ;
(c) insoler l'ensemble formé à l'issue de l'étape (b) du côté de la couche en matériau photosensible pour activer la partie de cette couche qui n'est pas protégée par le masque ;
(d) retirer le masque ;
(e) révéler par voie chimique le motif de la couche en matériau photosensible défini par le masque, cette étape permettant de supprimer la partie de la couche photosensible insolée lors de l'étape (c) et ainsi de mettre à nue une partie de la couche métallique ;
(f) effectuer un recuit initial pour durcir la partie de la couche en matériau photosensible restante ;
(g) supprimer par voie chimique la partie de la couche métallique qui a été mise à nue lors de l'étape (e), par exemple dans une solution d'attaque chimique aqueuse basique ou acide ;
(h) supprimer la partie de la couche en matériau photosensible restante, de sorte à former une feuille en polyimide sur laquelle est déposé le motif métallique correspondant à celui du masque ;
(i) former le ou chaque levier dans la feuille en polyimide,
**caractérisé en ce qu'**il comprend en outre les étapes suivantes :
- réaliser un premier pré-recuit pour évaporer les fluides absorbés par la couche en polyimide ;
- déposer une couche faite d'un matériau photosensible négatif sur une première face de l'ensemble concerné, cette première face étant la face de la feuille sur laquelle le motif métallique est déposé ;
- réaliser un deuxième pré-recuit pour chasser les solvants de la couche du matériau photosensible et en améliorer l'homogénéisation;
- déposer un masque sur la couche en matériau photosensible négatif, ledit masque étant un masque négatif dont le motif définit au moins la forme du ou de chaque levier, à réaliser, du capteur ;
- insoler l'ensemble formé à l'étape précédente par sa première face pour activer une partie de cette couche qui n'est pas protégée par le masque ;
- retirer le masque de la première face ;
- réaliser un premier recuit pour durcir la partie de la couche en matériau photosensible négatif qui n'est pas protégée par le masque ;
- révéler par voie chimique le motif du matériau photosensible défini par le masque, cette étape permettant ainsi de supprimer la partie de la couche en matériau photosensible négatif qui était protégée par le masque ;
- réaliser un deuxième recuit pour durcir complètement le motif du matériau photosensible ; puis :
- réaliser un troisième pré-recuit pour évaporer les fluides absorbés par la couche en polyimide ;
- déposer une couche faite d'un matériau photosensible négatif sur une deuxième face de l'ensemble formé à l'étape précédente, ladite deuxième face étant opposée à ladite première face ;
- réaliser un quatrième pré-recuit pour chasser les solvants de la couche du matériau photosensible et en améliorer l'homogénéisation;
- déposer un masque sur la couche en matériau photosensible négatif déposée sur la deuxième face, ledit masque étant un masque négatif agencé pour autoriser la formation du ou de chaque levier, à réaliser, du capteur ;
- insoler l'ensemble formé à l'étape précédente par la deuxième face pour activer une partie de la couche en matériau photosensible qui n'est pas protégée par le masque ;
- retirer le masque de la deuxième face ;
- réaliser un troisième recuit pour durcir la partie de la couche en matériau photosensible négatif situé sur la deuxième face qui n'est pas protégée par le masque ;
- révéler par voie chimique le motif du matériau photosensible défini par le masque, cette étape permettant ainsi de supprimer la partie de la couche en matériau photosensible négatif de la deuxième face qui était protégée par le masque ;
- réaliser un quatrième recuit pour durcir complètement le motif du matériau photosensible de la deuxième face ;
- immerger l'ensemble formé à l'issue de l'étape précédente dans une solution fortement basique apte à attaquer le polyimide dans les zones non protégées par le matériau photosensible pour une durée prédéterminée permettant de définir l'épaisseur du ou de chaque levier en polyimide.

2. Procédé de fabrication d'un capteur piézorésistif selon la revendication 1, **caractérisé en ce que** l'étape (f) de recuit initial comprend les étapes suivantes :
- chauffer à 75°C pendant au moins 2 min ;
- réaliser une montée de la température de chauffage de 75°C à 100°C, par paliers successifs de 5°C en 5°C, chaque palier étant maintenu sur une durée d'au moins 2 min ;
- chauffer à 110°C pendant au moins 8 min ; ladite étape (f) de recuit initial étant avantageusement suivie d'un refroidissement naturel à température ambiante.

3. Procédé de fabrication d'un capteur piézorésistif comprenant au moins un levier en polyimide muni d'au moins une électrode à partir d'une feuille en polyimide, comprenant les étapes suivantes :
(aa) déposer une couche faite d'un matériau photosensible positif sur la feuille en polyimide ;
(bb) déposer un masque sur la couche en matériau photosensible, ledit masque étant un masque négatif dont le motif définit au moins la forme de ou de chaque électrodes métallique, à réaliser, du capteur ;
(cc) insoler l'ensemble formé à l'issue de l'étape (bb) du côté de la couche en matériau photosensible pour activer une première partie de cette couche qui n'est pas protégée par le masque ;
(dd) retirer le masque ;
(ee) révéler par voie chimique le motif de la couche en matériau photosensible défini par le masque, cette étape permettant de supprimer la partie de la couche photosensible insolée lors de l'étape (cc) et ainsi de mettre à nue une partie de la feuille en polyimide ;
(ff) déposer un métal sur la partie du polyimide mise à nue à l'issue de l'étape (ee), par exemple par pulvérisation sous vide ;
(gg) supprimer par voie chimique la partie de la couche en matériau photosensible restante, de sorte à former une feuille en polyimide sur laquelle est déposé le motif métallique correspondant à un négatif du motif du masque
(hh) former le ou chaque levier dans la feuille en polyimide,
**caractérisé en ce qu'**il comprend en outre les étapes suivantes :
- réaliser un premier pré-recuit pour évaporer les fluides absorbés par la couche en polyimide ;
- déposer une couche faite d'un matériau photosensible négatif sur une première face de l'ensemble concerné, cette première face étant la face de la feuille sur laquelle le motif métallique est déposé ;
- réaliser un deuxième pré-recuit pour chasser les solvants de la couche du matériau photosensible et en améliorer l'homogénéisation;
- déposer un masque sur la couche en matériau photosensible négatif, ledit masque étant un masque négatif dont le motif définit au moins la forme du ou de chaque levier, à réaliser, du capteur ;
- insoler l'ensemble formé à l'étape précédente par sa première face pour activer une partie de cette couche qui n'est pas protégée par le masque ;
- retirer le masque de la première face ;
- réaliser un premier recuit pour durcir la partie de la couche en matériau photosensible négatif qui n'est pas protégée par le masque ;
- révéler par voie chimique le motif du matériau photosensible défini par le masque, cette étape permettant ainsi de supprimer la partie de la couche en matériau photosensible négatif qui était protégée par le masque ;
- réaliser un deuxième recuit pour durcir complètement le motif du matériau photosensible ; puis :
- réaliser un troisième pré-recuit pour évaporer les fluides absorbés par la couche en polyimide ;
- déposer une couche faite d'un matériau photosensible négatif sur une deuxième face de l'ensemble formé à l'étape précédente, ladite deuxième face étant opposée à ladite première face ;
- réaliser un quatrième pré-recuit pour chasser les solvants de la couche du matériau photosensible et en améliorer l'homogénéisation;
- déposer un masque sur la couche en matériau photosensible négatif déposée sur la deuxième face, ledit masque étant un masque négatif agencé pour autoriser la formation du ou de chaque levier, à réaliser, du capteur ;
- insoler l'ensemble formé à l'étape précédente par la deuxième face pour activer une partie de la couche en matériau photosensible qui n'est pas protégée par le masque ;
- retirer le masque de la deuxième face ;
- réaliser un troisième recuit pour durcir la partie de la couche en matériau photosensible négatif situé sur la deuxième face qui n'est pas protégée par le masque ;
- révéler par voie chimique le motif du matériau photosensible défini par le masque, cette étape permettant ainsi de supprimer la partie de la couche en matériau photosensible négatif de la deuxième face qui était protégée par le masque ;
- réaliser un quatrième recuit pour durcir complètement le motif du matériau photosensible de la deuxième face ;
- immerger l'ensemble formé à l'issue de l'étape précédente dans une solution fortement basique apte à attaquer le polyimide dans les zones non protégées par le matériau photosensible pour une durée prédéterminée permettant de définir l'épaisseur du ou de chaque levier en polyimide.

4. Procédé de fabrication d'un capteur piézorésistif selon l'une des revendications précédentes, **caractérisé en ce que**, entre les étapes (a) et (b) ou, selon le cas, entre les étapes (aa) et (bb), on réalise un pré-recuit, par exemple sous 70°C pendant 30 minutes, suivi d'un refroidissement naturel.

5. Procédé de fabrication d'un capteur piézorésistif selon l'une des revendications précédentes, **caractérisé en ce que** l'étape (e), ou selon le cas, l'étape (ee), de révélation comprend les étapes suivantes :
- immerger l'ensemble formé à l'issue de l'étape (d), ou, selon le cas, à l'issue de l'étape (dd) dans une solution aqueuse basique, par exemple pendant quelques dizaines de secondes ; puis
- retirer cet ensemble de la solution aqueuse basique ; et
- immerger cet ensemble dans une autre solution aqueuse, éventuellement acidifiée, pour stopper la réaction chimique de révélation.

6. Procédé de fabrication d'un capteur piézorésistif selon l'une des revendications précédentes, **caractérisé en ce que** l'étape (h) ou, selon le cas, l'étape (gg) de suppression de la couche de matériau photosensible restante est réalisée par trempage de l'ensemble concerné dans un solvant organique, par exemple de l'acétone, éventuellement suivi d'un trempage dans un alcool tel que l'éthanol.

7. Procédé de fabrication d'un capteur piézorésistif selon l'une des revendications précédentes, **caractérisé en ce que**, le premier pré-recuit ou le troisième pré-recuit est réalisé à 100°C pendant une durée d'au moins une heure.

8. Procédé de fabrication d'un capteur piézorésistif selon l'une des revendications précédentes, **caractérisé en ce que** le deuxième pré-recuit ou le quatrième pré-recuit est effectué en deux étapes consistant à effectuer un premier chauffage entre 75°c et 95°c par palier successif de 5°C d'une durée de 2mn chacun suivie d'un deuxième chauffage à 105°C pendant une durée d'une minute.

9. Procédé de fabrication d'un capteur piézorésistif selon l'une des revendications précédentes, **caractérisé en ce que** l'un au moins du premier recuit ou du troisième recuit réalisé pour la formation du ou de chaque levier en polyimide comprend les étapes suivantes :
- chauffer à 75°C pendant au moins 2mn ;
- réaliser une montée de la température de chauffage de 75°C à 105°C, sur une durée d'au moins 30s ;
- chauffer à 105°C pendant au moins 2mn ;
ladite étape de recuit étant avantageusement suivie d'un refroidissement naturel à température ambiante.

10. Procédé de fabrication d'un capteur piézorésistif selon l'une des revendications précédentes, **caractérisé en ce que** l'un au moins du deuxième recuit ou du quatrième recuit visant à durcir complètement le motif du matériau photosensible consiste à chauffer l'ensemble concerné à une température d'au moins 150°C pendant une durée minimum de 30 min.

11. Procédé de fabrication d'un capteur piézorésistif selon l'une des revendications précédentes, **caractérisé en ce qu'**une protection telle qu'une graisse silicone est appliquée sur une partie du motif métallique non recouverte d'un matériau photosensible, juste avant l'étape d'immersion de l'ensemble concerné dans une solution basique apte à attaquer le polyimide.

12. Procédé de fabrication d'un capteur piézorésistif selon l'une des revendications précédentes, **caractérisé en ce que** l'étape (i) ou, selon le cas, l'étape (hh), comprend les étapes suivantes :
- imprimer une encre solide sur une première face de l'ensemble formé à l'issue de l'étape (h) ou, selon le cas, à l'issue de l'étape (gg), sur une zone comportant au moins le motif métallique ;
- imprimer une encre solide sur une partie seulement d'une deuxième face de l'ensemble formé à l'issue de l'étape (h), ou, selon le cas, à l'issue de l'étape (gg), cette deuxième face étant la face qui est opposée à la première face ;
- immerger l'ensemble formé à l'issue de l'étape précédente dans une solution basique apte à attaquer le polyimide dans les zones non protégées par l'encre solide pour une durée prédéterminée permettant de définir l'épaisseur du ou de chaque levier en polyimide ;
- supprimer l'encre solide, par exemple en immergeant l'ensemble formé à l'issue de l'étape précédente dans un solvant organique tel que l'acétone ou l'éthanol.

13. Procédé de fabrication d'un capteur piézorésistif selon l'une des revendications 1 à 11, **caractérisé en ce que** l'étape (i) ou, selon le cas, l'étape (hh), consiste à découper le polyimide avec un laser à la forme souhaitée pour former le ou chaque levier, le laser étant par exemple un laser CO₂.

14. Procédé de fabrication d'un capteur piézorésistif selon l'une des revendications 12 ou 13, **caractérisé en ce que**, à l'issue de l'étape (i) ou, selon le cas, de l'étape (hh), on réalise une étape additionnelle de dépôt d'une couche protectrice du motif métallique, par exemple par polymérisation en phase gazeuse de monomères de paracyclophane obtenu par pyrolyse, ou par électrogreffage d'une peinture électrophorétique.

## Patentansprüche

1. Verfahren zur Herstellung eines piezoresistiven Sensors mit mindestens einem Polyimidhebel, der mit mindestens einer Elektrode aus einer mit einer Metallschicht überzogenen Polyimidfolie versehen ist, wobei das Verfahren die folgenden Schritte umfasst:
(a) Abscheiden einer Schicht aus einem positiven lichtempfindlichen Material auf die Metallschicht;
(b) Abscheiden einer Maske auf die Schicht aus lichtempfindlichem Material, wobei die Maske eine Positivmaske ist, deren Muster mindestens die Form der oder jeder herzustellenden Metallelektrode des Sensors definiert;
(c) Belichten des nach Schritt (b) gebildeten Ganzen auf der Seite mit der Schicht aus lichtempfindlichem Material, um den Teil dieser Schicht zu aktivieren, der nicht durch die Maske geschützt ist;
(d) Entfernen der Maske;
(e) chemische Freilegung des Musters, das durch die Maske auf der Schicht aus lichtempfindlichem Material definiert wurde, wobei in diesem Schritt der in Schritt (c) belichtete Teil der lichtempfindlichen Schicht entfernt und somit ein Teil der Metallschicht freigelegt wird;
(f) Durchführung einer ersten Glühung, um den verbleibenden Teil der Schicht aus lichtempfindlichem Material zu härten;
(g) chemisches Entfernen des in Schritt (e) freigelegten Teils der Metallschicht, beispielsweise in einer basischen oder sauren Ätzlösung auf Wasserbasis;
(h) Entfernen des verbleibenden Teils der Schicht aus lichtempfindlichem Material, sodass eine Polyimidfolie entsteht, auf der das der Maske entsprechende Metallmuster aufgebracht ist;
(i) Formung des oder jedes Hebels in der Polyimidfolie,
die durch die folgenden Schritte gekennzeichnet ist:
- Durchführung einer ersten Vorglühung, um die von der Polyimidschicht aufgenommenen Fluide zu verdampfen;
- Abscheiden einer Schicht aus einem negativen lichtempfindlichen Material auf einer ersten Seite des Ganzen, wobei diese erste Seite die Seite der Folie ist, auf der das Metallmuster aufgebracht ist;
- Durchführung einer zweiten Vorglühung, um die Lösungsmittel von der Schicht aus lichtempfindlichem Material zu entfernen und deren Homogenisierung zu verbessern;
- Abscheiden einer Maske auf die Schicht aus negativem lichtempfindlichem Material, wobei die Maske eine Negativmaske ist, deren Muster mindestens die Form des oder jedes herzustellenden Hebels des Sensors definiert;
- Belichtung des im vorhergehenden Schritt gebildeten Ganzen auf der ersten Seite, um einen Teil dieser Schicht zu aktivieren, der nicht durch die Maske geschützt ist;
- Entfernung der Maske von der ersten Seite;
- Durchführung einer ersten Glühung, um den Teil der Schicht aus negativem lichtempfindlichem Material zu härten, der nicht durch die Maske geschützt ist;
- das durch die Maske definierte Muster aus lichtempfindlichem Material chemisch freilegen und so den Teil der Schicht aus negativem lichtempfindlichem Material entfernen, der durch die Maske geschützt wurde;
- Durchführung einer zweiten Glühung, um das Muster aus lichtempfindlichem Material vollständig zu härten; dann:
- Durchführung einer dritten Vorglühung, um die von der Polyimidschicht aufgenommenen Fluide zu verdampfen;
- Aufbringen einer Schicht aus einem negativen lichtempfindlichen Material auf einer zweiten Seite des im vorherigen Schritt gebildeten Ganzen, wobei die zweite Seite der ersten Seite gegenüberliegt;
- Durchführung einer vierten Vorglühung, um die Lösungsmittel von der Schicht aus lichtempfindlichem Material zu entfernen und deren Homogenisierung zu verbessern;
- Abscheiden einer Maske auf die Schicht aus negativem lichtempfindlichem Material, das auf die zweite Seite abgeschieden wurde, wobei die Maske eine Negativmaske ist, die so angelegt ist, dass sie die Ausbildung des oder jedes herzustellenden Hebels des Sensors ermöglicht;
- Belichtung des im vorhergehenden Schritt gebildeten Ganzen von der zweiten Seite, um einen Teil dieser Schicht aus lichtempfindlichem Material zu aktivieren, der nicht durch die Maske geschützt ist;
- Entfernung der Maske von der zweiten Seite;
- Durchführung einer dritten Glühung, um den Teil der Schicht aus negativem lichtempfindlichem Material auf der zweiten Seite zu härten, der nicht durch die Maske geschützt ist;
- das durch die Maske definierte Muster aus lichtempfindlichem Material chemisch freilegen und so den Teil der Schicht aus negativem lichtempfindlichem Material von der zweiten Seite entfernen, der durch die Maske geschützt wurde;
- Durchführung einer vierten Glühung, um das Muster aus lichtempfindlichem Material auf der zweiten Seite vollständig zu härten;
- Tauchen des am Ende des vorherigen Schrittes gebildeten Ganzen in eine stark basische Lösung, die das Polyimid in den nicht durch das lichtempfindliche Material geschützten Bereichen ätzen kann, für eine bestimmte Zeit, durch die die Dicke des oder jedes Polyimidhebels definiert werden kann.

2. Verfahren zur Herstellung eines piezoresistiven Sensors nach Anspruch 1, **dadurch gekennzeichnet, dass** die Erstglühung (f) die folgenden Schritte umfasst:
- mindestens 2 Minuten lang mit 75 °C erhitzen;
- Erhöhung der Temperatur von 75 °C auf 100°C in Schritten von je 5 °C, wobei jedes Temperaturniveau für eine Dauer von mindestens 2 Minuten gehalten wird;
- mindestens 8 Minuten lang mit 110 °C erhitzen;
wobei auf diese Erstglühung (f) vorzugsweise eine natürliche Abkühlung auf Umgebungstemperatur folgt.

3. Verfahren zur Herstellung eines piezoresistiven Sensors mit mindestens einem Polyimidhebel, der mit mindestens einer Elektrode aus einer Polyimidfolie versehen ist, wobei das Verfahren die folgenden Schritte umfasst:
(aa) Abscheiden einer Schicht aus einem positiven lichtempfindlichen Material auf die Polyimidschicht;
(bb) Abscheiden einer Maske auf die Schicht aus lichtempfindlichem Material, wobei die Maske eine Negativmaske ist, deren Muster mindestens die Form der oder jeder herzustellenden Metallelektrode des Sensors definiert;
(cc) Belichten des nach Schritt (bb) gebildeten Ganzen auf der Seite mit der Schicht aus lichtempfindlichem Material, um einen ersten Teil dieser Schicht zu aktivieren, der nicht durch die Maske geschützt ist;
(dd) Entfernen der Maske;
(ee) chemische Freilegung des Musters, das durch die Maske auf der Schicht aus lichtempfindlichem Material definiert wurde, wobei in diesem Schritt der in Schritt (cc) belichtete Teil der lichtempfindlichen Schicht entfernt und somit ein Teil der Polyimidfolie freigelegt wird;
(ff) Abscheiden eines Metalls auf dem am Ende von Schritt (ee) freigelegten Teil des Polyimids, z.B. durch Vakuumsputtern;
(gg) chemisches Entfernen des verbleibenden Teils der Schicht aus lichtempfindlichem Material, sodass eine Polyimidfolie entsteht, auf der das Metallmuster aufgebracht ist, das ein Negativ des Musters der Maske darstellt;
(hh) Formung des oder jedes Hebels in der Polyimidfolie,
die durch die folgenden Schritte gekennzeichnet ist:
- Durchführung einer ersten Vorglühung, um die von der Polyimidschicht aufgenommenen Fluide zu verdampfen;
- Abscheiden einer Schicht aus einem negativen lichtempfindlichen Material auf einer ersten Seite des Ganzen, wobei diese erste Seite die Seite der Folie ist, auf der das Metallmuster aufgebracht ist;
- Durchführung einer zweiten Vorglühung, um die Lösungsmittel von der Schicht aus lichtempfindlichem Material zu entfernen und deren Homogenisierung zu verbessern;
- Abscheiden einer Maske auf die Schicht aus negativem lichtempfindlichem Material, wobei die Maske eine Negativmaske ist, deren Muster mindestens die Form des oder jedes herzustellenden Hebels des Sensors definiert;
- Belichtung des im vorhergehenden Schritt gebildeten Ganzen auf der ersten Seite, um einen Teil dieser Schicht zu aktivieren, der nicht durch die Maske geschützt ist;
- Entfernung der Maske von der ersten Seite;
- Durchführung einer ersten Glühung, um den Teil der Schicht aus negativem lichtempfindlichem Material zu härten, der nicht durch die Maske geschützt ist;
- das durch die Maske definierte Muster aus lichtempfindlichem Material chemisch freilegen und so den Teil der Schicht aus negativem lichtempfindlichem Material entfernen, der durch die Maske geschützt wurde;
- Durchführung einer zweiten Glühung, um das Muster aus lichtempfindlichem Material vollständig zu härten; dann:
- Durchführung einer dritten Vorglühung, um die von der Polyimidschicht aufgenommenen Fluide zu verdampfen;
- Abscheiden einer Schicht aus einem negativen lichtempfindlichen Material auf einer zweiten Seite des im vorherigen Schritt gebildeten Ganzen, wobei die zweite Seite der ersten Seite gegenüberliegt;
- Durchführung einer vierten Vorglühung, um die Lösungsmittel von der Schicht aus lichtempfindlichem Material zu entfernen und deren Homogenisierung zu verbessern;
- Abscheiden einer Maske auf die Schicht aus negativem lichtempfindlichem Material, das auf die zweite Seite abgeschieden wurde, wobei die Maske eine Negativmaske ist, die so angelegt ist, dass sie die Ausbildung des oder jedes herzustellenden Hebels des Sensors ermöglicht;
- Belichtung des im vorhergehenden Schritt gebildeten Ganzen von der zweiten Seite, um einen Teil dieser Schicht aus lichtempfindlichem Material zu aktivieren, der nicht durch die Maske geschützt ist;
- Entfernung der Maske von der zweiten Seite;
- Durchführung einer dritten Glühung, um den Teil der Schicht aus negativem lichtempfindlichem Material auf der zweiten Seite zu härten, der nicht durch die Maske geschützt ist;
- das durch die Maske definierte Muster aus lichtempfindlichem Material chemisch freilegen und so den Teil der Schicht aus negativem lichtempfindlichem Material von der zweiten Seite entfernen, der durch die Maske geschützt wurde;
- Durchführung einer vierten Glühung, um das Muster aus lichtempfindlichem Material auf der zweiten Seite vollständig zu härten;
- Tauchen des am Ende des vorherigen Schrittes gebildeten Ganzen in eine stark basische Lösung, die das Polyimid in den nicht durch das lichtempfindliche Material geschützten Bereichen ätzen kann, für eine bestimmte Zeit, durch die die Dicke des oder jedes Polyimidhebels definiert werden kann.

4. Verfahren zur Herstellung eines piezoresistiven Sensors nach einem der vorgenannten Ansprüche, **dadurch gekennzeichnet, dass** zwischen den Schritten (a) und (b) bzw. zwischen den Schritten (aa) und (bb) eine Vorglühung durchgeführt wird, beispielsweise 30 Minuten bei 70 °C, auf die eine natürliche Abkühlung folgt.

5. Verfahren zur Herstellung eines piezoresistiven Sensors nach einem der vorgenannten Ansprüche, **dadurch gekennzeichnet, dass** Schritt (e) bzw. Schritt (ee) zur Freilegung des Musters die folgenden Schritte umfasst:
- Tauchen des am Ende von Schritt (d) bzw. am Ende von Schritt (dd) gebildeten Ganzen in eine basische Lösung auf Wasserbasis, z.B. für einige Dutzend Sekunden; dann
- Entnehmen dieses Ganzen aus der basischen Lösung auf Wasserbasis; und
- Tauchen dieses Ganzen in eine andere, eventuell angesäuerte Lösung auf Wasserbasis, um die chemische Reaktion der Freilegung zu beenden.

6. Verfahren zur Herstellung eines piezoresistiven Sensors nach einem der vorgenannten Ansprüche, **dadurch gekennzeichnet, dass** Schritt (h) bzw. Schritt (gg) des Entfernens der verbleibenden Schicht aus lichtempfindlichem Material durch Tauchen des Ganzen in ein organisches Lösungsmittel, beispielsweise Aceton, und eventuell anschließendes Tauchen in einen Alkohol, wie Ethanol, durchgeführt wird.

7. Verfahren zur Herstellung eines piezoresistiven Sensors nach einem der vorgenannten Ansprüche, **dadurch gekennzeichnet, dass** die erste Vorglühung bzw. die dritte Vorglühung während mindestens 1 Stunde Dauer bei 100 °C erfolgt.

8. Verfahren zur Herstellung eines piezoresistiven Sensors nach einem der vorgenannten Ansprüche, **dadurch gekennzeichnet, dass** die zweite Vorglühung bzw. die vierte Vorglühung in zwei Schritten erfolgt, wobei eine erste Erwärmung von 75 °C bis 95 °C in aufeinanderfolgenden Schritten von je 5 °C und jeweils 2 Minuten Dauer durchgeführt wird, auf die eine zweite Erwärmung bei 105 °C für einen Dauer von 1 Minute folgt.

9. Verfahren zur Herstellung eines piezoresistiven Sensors nach einem der vorgenannten Ansprüche, **dadurch gekennzeichnet, dass** von der ersten und der dritten Glühung, die zur Bildung des oder jedes Polyimidhebels durchgeführt wird, mindestens eine die folgenden Schritte umfasst:
- mindestens 2 Minuten lang mit 75 °C erhitzen;
- Erhöhung der Temperatur von 75 °C auf 105 °C über einen Zeitraum von mindestens 30 Sekunden;
- mindestens 2 Minuten lang mit 105 °C erhitzen;
wobei auf diese Glühung vorzugsweise eine natürliche Abkühlung auf Umgebungstemperatur folgt.

10. Verfahren zur Herstellung eines piezoresistiven Sensors nach einem der vorgenannten Ansprüche, **dadurch gekennzeichnet, dass** von der zweiten oder vierten Glühung zur vollständigen Aushärtung des Musters des lichtempfindlichen Materials mindestens eine darin besteht, das Ganze für eine Dauer von mindestens 30 Minuten auf eine Temperatur von mindestens 150 °C zu erhitzen.

11. Verfahren zur Herstellung eines piezoresistiven Sensors nach einem der vorgenannten Ansprüche, **dadurch gekennzeichnet, dass** direkt vor dem Tauchen des Ganzen in eine basischen Lösung, die das Polyimid ätzen kann, ein Schutz wie ein Silikonfett auf einen Teil des Metallmusters aufgebracht wird, der nicht mit lichtempfindlichem Material beschichtet ist.

12. Verfahren zur Herstellung eines piezoresistiven Sensors nach einem der vorgenannten Ansprüche, **dadurch gekennzeichnet, dass** Schritt (i) bzw. Schritt (hh) die folgenden Schritte umfasst:
- Drucken einer festen Tinte auf eine erste Seite des am Ende von Schritt (h) bzw. am Ende von Schritt (gg) gebildeten Ganzen auf einen Bereich, der mindestens das Metallmuster enthält;
- Drucken einer festen Tinte auf nur einen Teil einer zweiten Seite des am Ende von Schritt (h) bzw. am Ende von Schritt (gg) gebildeten Ganzen, wobei diese zweite Seite der ersten Seite gegenüberliegt;
- Tauchen des am Ende des vorherigen Schrittes gebildeten Ganzen in eine basische Lösung, die das Polyimid in den nicht durch die feste Tinte geschützten Bereichen ätzen kann, für eine bestimmte Zeit, die es ermöglicht, die Dicke des oder jedes Polyimidhebels zu definieren;
- Entfernen der festen Tinte, z.B. durch Tauchen des am Ende des vorherigen Schrittes gebildeten Ganzen in ein organisches Lösungsmittel wie Aceton oder Ethanol.

13. Verfahren zur Herstellung eines piezoresistiven Sensors nach einem der Ansprüche 1 bis 11, **dadurch gekennzeichnet, dass** Schritt (i) bzw. Schritt (hh) aus dem Zuschneiden des Polyimids mit einem Laser auf die gewünschte Form besteht, um den oder jeden Hebel zu formen, wobei der Laser beispielsweise ein CO₂-Laser ist.

14. Verfahren zur Herstellung eines piezoresistiven Sensors nach einem der Ansprüche 12 oder 13, **dadurch gekennzeichnet, dass** am Ende von Schritt (i) bzw. von Schritt (hh) ein zusätzlicher Schritt zum Abscheiden einer Schutzschicht für das Metallmuster erfolgt, beispielsweise durch Gasphasenpolymerisation von durch Pyrolyse erhaltenen Paracyclophan-Monomeren oder durch Elektropfropfung einer elektrophoretischen Beschichtung.

## Claims

1. Method for producing a piezoresistive sensor comprising at least one polyimide lever equipped with at least one electrode from a polyimide sheet covered in a metal layer, comprising the following steps:
(a) depositing a layer made of a positive photosensitive material on the metal layer;
(b) depositing a mask on the layer made of photosensitive material, said mask being a positive mask of which the pattern defines at least the shape of the or of each metal electrode, to be produced, of the sensor;
(c) exposing the unit formed from step (b) to light on the side of the layer made of photosensitive material to activate the part of this layer which is not protected by the mask;
(d) removing the mask;
(e) chemically revealing the pattern of the layer made of photosensitive material defined by the mask, this step enabling to remove the part of the photosensitive layer exposed to light during step (c) and thus strip a part of the metal layer;
(f) carrying out an initial annealing to harden the part of the remaining layer made of photosensitive material;
(g) chemically removing the part of the metal layer which has been stripped during step (e), for example, in an alkaline or acid aqueous etching solution;
(h) removing the part of the remaining layer made of photosensitive material, so as to form a polyimide sheet whereon is deposited the metal pattern corresponding to that of the mask;
(i) forming the or each lever in the polyimide sheet, **characterised in that** it further comprises the following steps:
- carrying out a first pre-annealing to evaporate the fluids absorbed by the polyimide layer;
- depositing a layer made of a negative photosensitive material on a first face of the unit in question, this first face being the face of the sheet whereon the metal pattern is deposited;
- carrying out a second pre-annealing to oust the solvents from the layer made of photosensitive material and to improve the homogenisation thereof;
- depositing a mask on the layer made of negative photosensitive material, said mask being a negative mask of which the pattern defines at least the shape of the or of each lever, to be produced, of the sensor;
- exposing the unit formed in the preceding step to light by the first face thereof to activate a part of this layer which is not protected by the mask;
- removing the mask from the first face;
- carrying out a first annealing to harden the part of the layer made of negative photosensitive material which is not protected by the mask;
- chemically revealing the pattern of the photosensitive material defined by the mask, this step thus enabling to remove the part of the layer made of negative photosensitive material which was protected by the mask;
- carrying out a second annealing to completely harden the pattern of the photosensitive material; then:
- carrying out a third pre-annealing to evaporate the fluids absorbed by the polyimide layer;
- depositing a layer made of a negative photosensitive material on a second face of the unit formed in the preceding step, said second face being opposite said first face;
- carrying out a fourth pre-annealing to oust the solvents from the layer made of photosensitive material and to improve the homogenisation thereof;
- depositing a mask on the layer made of negative photosensitive material deposited on the second face, said mask being a negative mask arranged to enable the formation of the or of each lever, to be produced, of the sensor;
- exposing the unit formed in the preceding step to light by the second face to activate a part of the layer made of photosensitive material which is not protected by the mask;
- removing the mask from the second face;
- carrying out a third annealing to harden the part of the layer made of negative photosensitive material situated on the second face which is not protected by the mask;
- chemically revealing the pattern of the photosensitive material defined by the mask, this step thus enabling to remove the part of the layer made of negative photosensitive material from the second face which was protected by the mask;
- carrying out a fourth annealing to completely harden the pattern of the photosensitive material of the second face;
- immersing the unit formed from the preceding step in a highly alkaline solution able to attack the polyimide in zones not protected by the photosensitive material for a predetermined duration enabling to define the thickness of the or of each polyimide lever.

2. Method for producing a piezoresistive sensor according to claim 1, **characterised in that** the initial annealing step (f) comprises the following steps:
- heating to 75 °C for at least 2 minutes;
- achieving a heating temperature increase from 75 °C to 100 °C, through successive 5 °C levels, each level being maintained over a duration of at least 2 minutes;
- heating to 110 °C for at least 8 minutes;
said initial annealing step (f) being advantageously followed by a natural cooling to room temperature.

3. Method for producing a piezoresistive sensor comprising at least one polyimide lever equipped with at least one electrode from a polyimide sheet, comprising the following steps:
(aa) depositing a layer made of a positive photosensitive material on the metal layer;
(bb) depositing a mask on the layer made of photosensitive material, said mask being a negative mask of which the pattern defines at least the shape of the or of each metal electrode, to be produced, of the sensor;
(cc) exposing the unit formed from step (bb) to light on the side of the layer made of photosensitive material to activate the part of this layer which is not protected by the mask;
(dd) removing the mask;
(ee) chemically revealing the pattern of the layer made of photosensitive material defined by the mask, this step enabling to remove the part of the photosensitive layer exposed to light during step (cc) and thus strip a part of the polyimide sheet;
(ff) depositing a metal on the polyimide part stripped from step (ee), for example, by vacuum spraying;
(gg) chemically removing the part of the remaining photosensitive layer, so as to form a polyimide sheet whereon is deposited the metal pattern corresponding to a negative of the pattern of the mask;
(hh) forming the or each lever in the polyimide sheet,
**characterised in that** it further comprises the following steps:
- carrying out a first pre-annealing to evaporate the fluids absorbed by the polyimide layer;
- depositing a layer made of a negative photosensitive material on a first face of the unit in question, this first face being the face of the sheet whereon the metal pattern is deposited;
- carrying out a second pre-annealing to oust the solvents from the layer made of photosensitive material and to improve the homogenisation thereof;
- depositing a mask on the layer made of negative photosensitive material, said mask being a negative mask of which the pattern defines at least the shape of the or of each lever, to be produced, of the sensor;
- exposing the unit formed in the preceding step to light by the first face thereof to activate a part of this layer which is not protected by the mask;
- removing the mask from the first face;
- carrying out a first annealing to harden the part of the layer made of negative photosensitive material which is not protected by the mask;
- chemically revealing the pattern of the photosensitive material defined by the mask, this step thus enabling to remove the part of the layer made of negative photosensitive material which was protected by the mask;
- carrying out a second annealing to completely harden the pattern of the photosensitive material; then:
- carrying out a third pre-annealing to evaporate the fluids absorbed by the polyimide layer;
- depositing a layer made of a negative photosensitive material on a second face of the unit formed in the preceding step, said second face being opposite said first face;
- carrying out a fourth pre-annealing to oust the solvents from the layer made of photosensitive material and to improve the homogenisation thereof;
- depositing a mask on the layer made of negative photosensitive material deposited on the second face, said mask being a negative mask arranged to enable the formation of the or of each lever, to be produced, of the sensor;
- exposing the unit formed in the preceding step to light by the second face to activate a part of the layer made of photosensitive material which is not protected by the mask;
- removing the mask from the second face;
- carrying out a third annealing to harden the part of the layer made of negative photosensitive material situated on the second face which is not protected by the mask;
- chemically revealing the pattern of the photosensitive material defined by the mask, this step thus enabling to remove the part of the layer made of negative photosensitive material from the second face which was protected by the mask;
- carrying out a fourth annealing to completely harden the pattern of the photosensitive material of the second face;
- immersing the unit formed from the preceding step in a highly alkaline solution able to attack the polyimide in zones not protected by the photosensitive material for a predetermined duration enabling to define the thickness of the or of each polyimide lever.

4. Method for producing a piezoresistive sensor according to one of the preceding claims, **characterised in that**, between steps (a) and (b) or, as the case may be, between steps (aa) and (bb), a pre-annealing is carried out, for example under 70 °C for 30 minutes, following by a natural cooling.

5. Method for producing a piezoresistive sensor according to one of the preceding claims, **characterised in that** step (e) or, as the case may be, step (ee), the revelation comprises the following steps:
- immersing the unit formed from step (d) or, as the case may be, from step (dd) in an alkaline aqueous solution, for example, for a few dozen seconds; then;
- removing this unit from the alkaline aqueous solution; and
- immersing this unit in another aqueous solution, possibly acidified, to stop the revealing chemical reaction.

6. Method for producing a piezoresistive sensor according to one of the preceding claims, **characterised in that** step (h) or, as the case may be, step (gg) of removing the remaining layer made of photosensitive material is carried out by soaking the unit in question in an organic solvent, for example, acetone, possibly followed by soaking in an alcohol, such as ethanol.

7. Method for producing a piezoresistive sensor according to one of the preceding claims, **characterised in that** the first pre-annealing or the third pre-annealing is carried out at 100 °C for a duration of at least one hour.

8. Method for producing a piezoresistive sensor according to one of the preceding claims, **characterised in that** the second pre-annealing or the fourth pre-annealing is carried out in two steps consisting in carrying out a first heating between 75 °C and 95 °C by successive 5 °C levels for a duration of 2 minutes, each one followed by a second heating to 105 °C for a duration of one minute.

9. Method for producing a piezoresistive sensor according to one of the preceding claims, **characterised in that** the at least one of the first annealing or of the third annealing carried out to form the or each polyimide lever comprises the following steps:
- heating to 75 °C for at least 2 minutes;
- achieving a heating temperature increase from 75 °C to 105 °C, over a duration of at least 30 seconds;
- heating to 105 °C for at least 2 minutes;
said annealing step being advantageously followed by a natural cooling to room temperature.

10. Method for producing a piezoresistive sensor according to one of the preceding claims, **characterised in that** the at least one of the second annealing or of the fourth annealing aiming to completely harden the pattern of the photosensitive material consists in heating the unit in question to a temperature of at least 150 °C for a minimum duration of 30 minutes.

11. Method for producing a piezoresistive sensor according to one of the preceding claims, **characterised in that** a protection such as a silicon grease is applied on a part of the metal pattern not covered by a photosensitive material, just before the step of immersing the unit in question in an alkaline solution able to attack the polyimide.

12. Method for producing a piezoresistive sensor according to one of the preceding claims, **characterised in that** step (i) or, as the case may be, step (hh), comprises the following steps:
- printing a solid ink on a first face of the unit formed from step (h) or, as the case may be, from step (gg), over a zone comprising at least the metal pattern;
- printing a solid ink on only a part of a second face of the unit formed from step (h) or, as the case may be, from step (gg), this second face being the face which is opposite the first face;
- immersing the unit formed from the preceding step in an alkaline solution able to attack the polyimide in the zones not protected by the solid ink for a predetermined duration enabling to define the thickness of the or of each polyimide lever;
- removing the solid ink, for example, by immersing the unit formed from the preceding step in an organic solvent such as acetone or ethanol.

13. Method for producing a piezoresistive sensor according to one of claims 1 to 11, **characterised in that** step (i) or, as the case may be, step (hh), consists in cutting the polyimide with a laser with the desired shape to form the or each lever, the laser, for example being a CO₂ laser.

14. Method for producing a piezoresistive sensor according to one of claims 12 or 13, **characterised in that**, from step (i) or, as the case may be, step (hh), an additional step of depositing a protective layer of the metal pattern is carried out, for example, by polymerisation in a gaseous phase of paracyclophane monomers obtained by pyrolysis, or by electrografting from an electrophoretic paint.
